# EUROPEAN PATENT APPLICATION

(11) **EP 4 813 209 A1**
(43) Date of publication of application: **30.09.2026**
(21) Application number: 24894193.2
(22) Date of filing: 21.11.2024
(51) Int. Cl.: A01N 25/00, A01N 37/44, A01N 43/50, A01N 47/44, A01P 21/00

(54) **AGENT FOR IMPROVING PLANT NON-BIOLOGICAL STRESS RESISTANCE, METHOD FOR IMPROVING NON-BIOLOGICAL STRESS RESISTANCE, PREPARATION FOR IMPROVING NON-BIOLOGICAL STRESS RESISTANCE, PRODUCT FOR IMPROVING NON-BIOLOGICAL STRESS RESISTANCE, AND PLANT**

(30) Priority: 21.11.2023 JP 2023197530
(71) Applicant: Kureha Corporation, Chuo-ku Tokyo 103-8552 (JP)
(72) Inventor: HIGASHIYAMA, Yukihiro, Tokyo 103-8552 (JP); JIMBO, Yusuke, Tokyo 103-8552 (JP); TETSU, Naoki, Tokyo 103-8552 (JP); KOSHIYAMA, Tatsuyuki, Tokyo 103-8552 (JP)
(74) Representative: Hoefer & Partner Patentanwälte mbB
(86) International application number: PCT/JP2024/041229
(87) International publication number: WO 2025/110202

(57) **Abstract**

Provided is a plant abiotic stress tolerance improver, which is capable of further enhancing an improvement effect of abiotic stress tolerance by using a compound such as ergothioneine. A plant abiotic stress tolerance improver according to the present invention includes: a first component which is a compound represented by Formula (I) below or a tautomer thereof, or an agronomically acceptable salt thereof; and a second component which is at least one selected from the group consisting of an amino acid, a peptide having a length of from 2 to 10 amino acids, a betaine, an organic acid or a salt thereof, a nucleobase, a vitamin, and a sugar or a sugar alcohol: 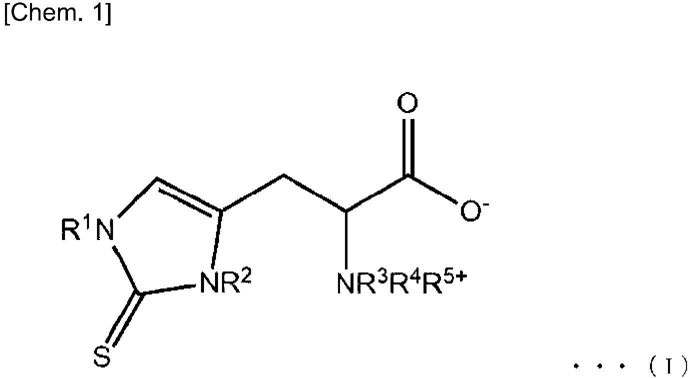 where in Formula (I), R¹ and R² each independently represent a hydrogen atom or an alkyl group having from 1 to 4 carbons, and R³, R⁴, and R⁵ each independently represent an alkyl group having from 1 to 4 carbons.

## Description

### [TECHNICAL FIELD]

The present invention relates to a plant abiotic stress tolerance improver, a method for improving abiotic stress tolerance, a formulation for improving abiotic stress tolerance, a product for improving abiotic stress tolerance, and a plant.

### [BACKGROUND ART]

A method for alleviating abiotic stress and a method for promoting plant growth and increasing a crop yield by application of a chemical have been studied. For example, Patent Document 1 describes that glycine betaine has an action of alleviating stress due to insufficient irrigation on plants.

Patent Document 2 describes that application of an aqueous solution of ergothioneine to a sprouted plant body increases the plant height, the number of flowers and fruits, and the yield of seeds.

### [CITATION LIST]

### [PATENT DOCUMENT]

Patent Document 1: WO 96/014749
Patent Document 2: WO 2021/005970

### [SUMMARY OF INVENTION]

### [TECHNICAL PROBLEM]

It is considered that abiotic stress greatly inhibits expression of potential productivity of plants. Thus, it is expected that the production amount of plants will be dramatically increased by applying a biostimulant for removing abiotic stress.

Compounds such as ergothioneine described in Patent Document 2 have effects such as an increase in production amount, plant height, and the numbers of seeds, flowers, and fruits. These compounds are thus considered to be promising first components for plants. On the other hand, it is also required to find a method for further enhancing the improvement effect of abiotic stress tolerance by these compounds and providing a further improvement effect against the decrease in production amount due to abiotic stress.

The present invention has been made in view of the above problems, and is directed to providing a plant abiotic stress tolerance improver, which can further enhance the improvement effect of abiotic stress tolerance by using a compound such as ergothioneine, a method for improving abiotic stress tolerance using the same, a formulation and a product for improving abiotic stress tolerance containing the same, and a plant treated with the same.

### [SOLUTION TO PROBLEM]

An embodiment of the present invention for solving the above-described problems relates to a plant abiotic stress tolerance improver, a method for improving abiotic stress tolerance, a formulation for improving abiotic stress tolerance, a product for improving abiotic stress tolerance, and a plant as described in [1] to [9] below.
[1] A plant abiotic stress tolerance improver, including:
   a first component which is a compound represented by Formula (I) below or a tautomer thereof, or an agronomically acceptable salt thereof; and
   a second component which is at least one selected from the group consisting of an amino acid, a peptide having a length of from 2 to 10 amino acids, a betaine, an organic acid or a salt thereof, a nucleobase, a vitamin, and a sugar or a sugar alcohol: 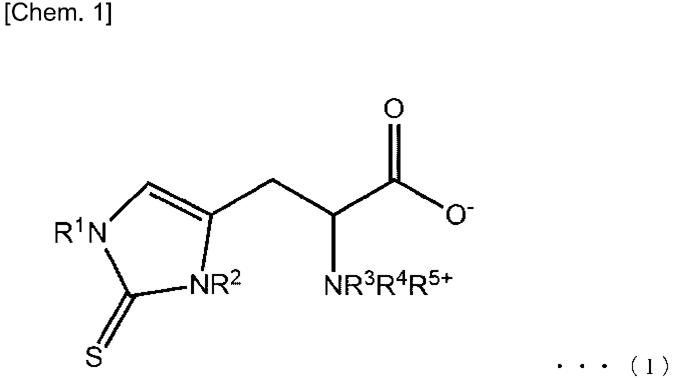
   where in Formula (I), R¹ and R² each independently represent a hydrogen atom or an alkyl group having from 1 to 4 carbons, and R³, R⁴, and R⁵ each independently represent an alkyl group having from 1 to 4 carbons.
[2] The abiotic stress tolerance improver according to [1], wherein
   the compound represented by Formula (I) is ergothioneine.
[3] The abiotic stress tolerance improver according to [1] or [2], wherein application of the improver to a plant improves tolerance of the plant to abiotic stress which is at least one selected from the group consisting of high temperature stress, low temperature stress, freezing stress, salt stress, excessive nutrient stress, drought stress, excessive water stress, ultraviolet stress, weak light stress, intense light stress, excessive mowing stress, foot traffic stress, hail stress, and strong wind stress.
[4] The abiotic stress tolerance improver according to any of [1] to [3], wherein application of the improver to a plant improves tolerance of the plant to abiotic stress which is at least one selected from the group consisting of high-temperature stress, ultraviolet stress, and excessive water stress.
[5] The abiotic stress tolerance improver according to any of [1] to [4], wherein the second component includes an amino acid, and
   the amino acid is glutamic acid or arginine.
[6] A method for improving abiotic stress tolerance of a plant, the method including:
   preparing a plant; and
   treating the plant with the abiotic stress tolerance improver described in any of [1] to [5].
[7] A formulation for improving abiotic stress tolerance of a plant, the formulation including:
   a first component which is a compound represented by Formula (I) below or a tautomer thereof, or an agronomically acceptable salt thereof;
   a second component which is at least one selected from the group consisting of an amino acid, a peptide having a length of from 2 to 10 amino acids, a betaine, an organic acid or a salt thereof, a nucleobase, a vitamin, and a sugar or a sugar alcohol; and
   a liquid carrier or a solid carrier: 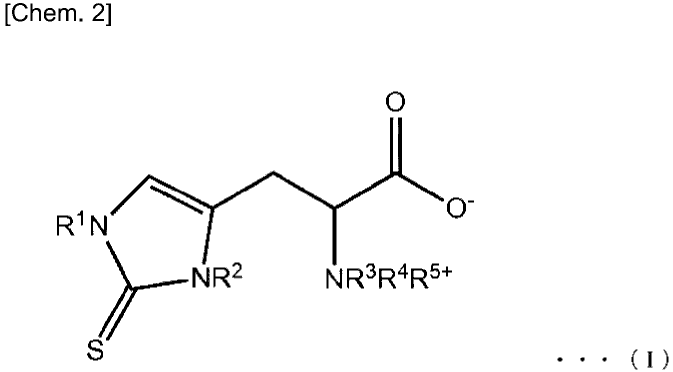
   where in Formula (I), R¹ and R² each independently represent a hydrogen atom or an alkyl group having from 1 to 4 carbons, and R³, R⁴, and R⁵ each independently represent an alkyl group having from 1 to 4 carbons.
[8] A product for improving abiotic stress tolerance of a plant, the product including:
   a first container containing a first component which is a compound represented by Formula (I) below or a tautomer thereof, or an agronomically acceptable salt thereof; and
   a second container containing a second component which is at least one selected from the group consisting of an amino acid, a peptide having a length of from 2 to 10 amino acids, a betaine, an organic acid or a salt thereof, a nucleobase, a vitamin, and a sugar or a sugar alcohol: 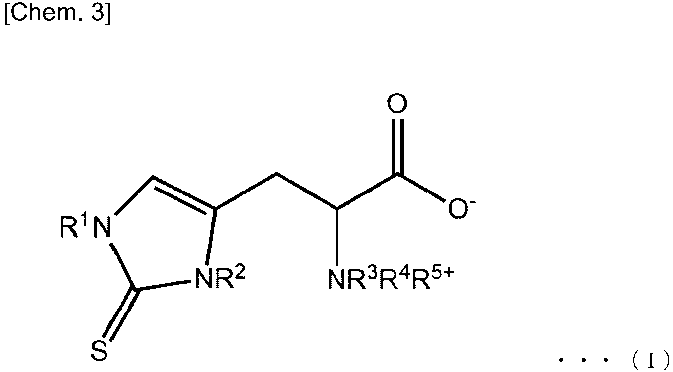
   where in Formula (I), R¹ and R² each independently represent a hydrogen atom or an alkyl group having from 1 to 4 carbons, and R³, R⁴, and R⁵ each independently represent an alkyl group having from 1 to 4 carbons.
[9] A plant grown by applying the abiotic stress tolerance improver described in any of [1] to [5].

### [ADVANTAGEOUS EFFECTS OF INVENTION]

According to the present invention, there are provided a plant abiotic stress tolerance improver, which can further enhance the improvement effect of abiotic stress tolerance by using a compound such as ergothioneine, a method for improving abiotic stress tolerance using the same, a formulation and a product for improving abiotic stress tolerance containing the same, and a plant treated with the same.

### [DESCRIPTION OF EMBODIMENTS]

One embodiment of the present invention relates to a plant abiotic stress tolerance improver including: a first component which is a compound represented by Formula (I) below or a tautomer thereof, or an agronomically acceptable salt thereof, and a second component which is at least one selected from the group consisting of an amino acid, a peptide having a length of from 2 to 10 amino acids, a betaine, an organic acid or a salt thereof, a nucleobase, a vitamin, and a sugar or a sugar alcohol.

### First Component

The first component is a compound represented by Formula (I) below or a tautomer thereof, or an agronomically acceptable salt thereof. The abiotic stress tolerance improver may contain only one kind of the first component or may contain a plurality of kinds of the first components.

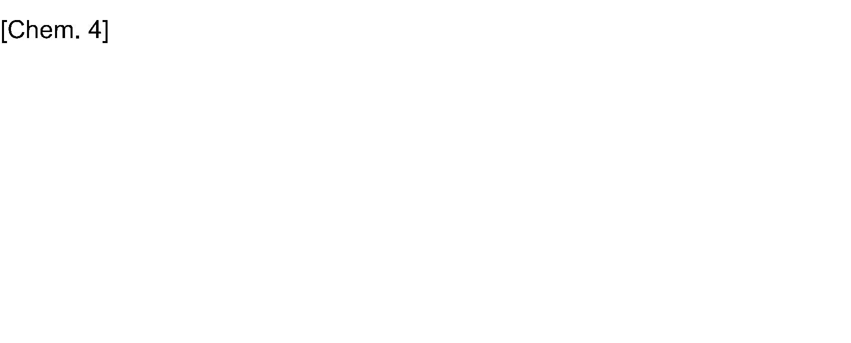

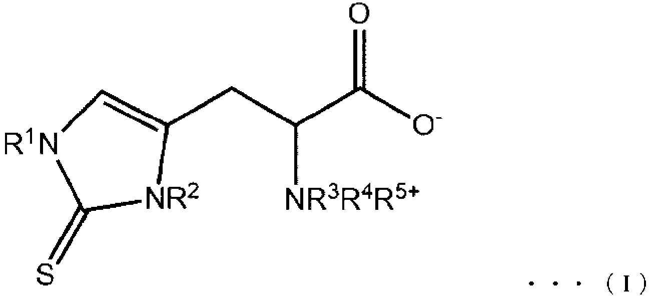

where in Formula (I), R¹ and R² each independently represent a hydrogen atom or an alkyl group having from 1 to 4 carbons, and R³, R⁴, and R⁵ each independently represent an alkyl group having from 1 to 4 carbons.

The alkyl group that can be included in R¹ to R⁵ may be linear or branched. Examples of the alkyl group that can be included in R¹ to R⁵ include a methyl group, an ethyl group, a propyl group, an isopropyl group, a butyl group, an isobutyl group, a sec-butyl group, and a tert-butyl group.

At least one of R¹ or R² is preferably a hydrogen atom, and more preferably both of them are hydrogen atoms. When R¹ and R² are alkyl groups, they are preferably methyl groups, ethyl groups or propyl groups, more preferably methyl groups or ethyl groups, and even more preferably methyl groups.

R³, R⁴, and R⁵ are each preferably independently a methyl group, an ethyl group, or a propyl group, more preferably a methyl group or an ethyl group, and even more preferably a methyl group. At least one of R³, R⁴, or R⁵ is preferably a methyl group, more preferably at least two of them are methyl groups, and even more preferably all of them are methyl groups.

When at least one of R¹ or R² is a hydrogen atom, the compound represented by Formula (I) has a tautomer. More specifically, when R² is a hydrogen atom, the compound represented by Formula (I) has a compound represented by Formula (II) below as a tautomer. When R¹ is a hydrogen atom, the compound represented by Formula (I) has a compound represented by Formula (III) below as a tautomer. Note that the term "tautomer" as used herein means both the compound represented by Formula (II) and the compound represented by Formula (III). 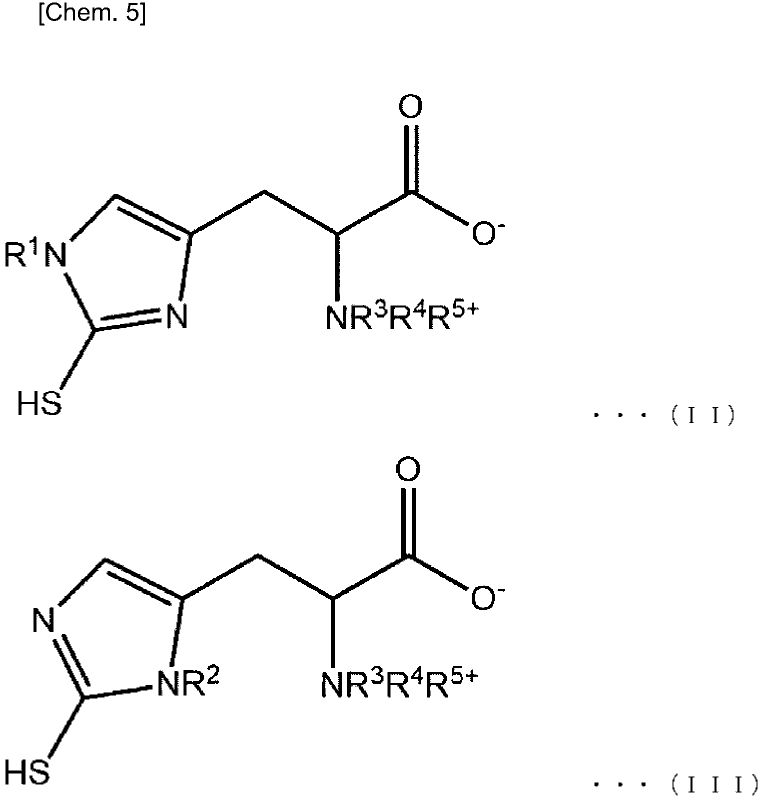 where in Formulas (II) and (III), R¹ to R⁵ are the same as R¹ to R⁵ in Formula (I).

Normally, in a solution, the compound represented by Formula (I) and the compound represented by Formula (II) or (III) can exist in equilibrium. A ratio of the compound represented by Formula (I) to the compound represented by Formula (II) or (III) can vary depending on the solvent, temperature, pH, or the like.

The compound represented by Formula (I) or a tautomer thereof is preferably ergothioneine, and more preferably L-(+)-ergothioneine.

As these compounds, commercially available compounds thereof may be used, or those synthesized by a technique well known to those skilled in the art, for example, a method described in JP 2013-506706 T or JP 2006-160748 A may be used. Ergothioneine is known to be produced by bacteria and fungi. Examples of such a production method using a microorganism include methods described in JP 2012-105618 A, JP 2014-223051 A, WO 2016/104437, WO 2016/121285, WO 2015/168112, and WO 2017/150304. As ergothioneine, a culture containing ergothioneine and obtained from these microorganisms may be used, or ergothioneine obtained by concentrating or purifying the culture may be used.

"Agronomically acceptable" means that it is safe, non-toxic, and not undesired biologically or otherwise, but it is acceptable for pesticides, especially for pesticides that improve abiotic stress tolerance in plants.

The "agronomically acceptable salt" of the compound represented by Formula (I) or a tautomer thereof is a salt that is agronomically acceptable as defined above, and means those capable of providing the action and effect of the compound represented by Formula (I) or a tautomer thereof. Examples of such a salt include hydrates, solvates, acid addition salts, a salt formed when an acidic proton (proton acide) present in the compound represented by Formula (I) or a tautomer thereof is substituted with a metal ion, and a salt formed when the acidic proton coordinates with an organic base or an inorganic base.

The acid addition salt may be formed with an inorganic acid or an organic acid. Examples of the inorganic acid include hydrochloric acid, hydrobromic acid, sulfuric acid, nitric acid, and phosphoric acid. Examples of the organic acid include acetic acid, benzenesulfonic acid, benzoic acid, camphorsulfonic acid, citric acid, ethanesulfonic acid, fumaric acid, glucoheptonic acid, gluconic acid, glutamic acid, glycolic acid, hydroxynaphthoic acid, 2-hydroxyethanesulfonic acid, lactic acid, maleic acid, malic acid, mandelic acid, methanesulfonic acid, muconic acid, 2-naphthalenesulfonic acid, propionic acid, salicylic acid, succinic acid, dibenzoyl-L-tartaric acid, tartaric acid, p-toluenesulfonic acid, trimethylacetic acid, and trifluoroacetic acid.

Examples of the metal ion capable of substituting the acidic proton present in the compound represented by Formula (I) or a tautomer thereof include an alkali metal ion, an alkaline earth metal ion, and an aluminum ion.

Examples of the organic base capable of coordinating with the acidic proton present in the compound represented by Formula (I) or a tautomer thereof include diethanolamine, ethanolamine, N-methylglucamine, triethanolamine, and tromethamine. Examples of the inorganic base capable of coordinating with the acidic proton present in the compound represented by Formula (I) or a tautomer thereof include aluminum hydroxide, calcium hydroxide, potassium hydroxide, sodium carbonate, and sodium hydroxide.

It is considered that the first component acts as a so-called biostimulant (abiotic stress tolerance improver) which promotes plant growth and alleviates abiotic stress.

### Second Component

The second component is at least one component selected from the group consisting of an amino acid, a peptide having a length of from 2 to 10 amino acids, a betaine, an organic acid or a salt thereof, a nucleobase, a vitamin, and a sugar or a sugar alcohol. These second components remarkably enhance the improvement effect of abiotic stress tolerance of a plant by a synergistic effect with the first component. The abiotic stress tolerance improver may contain only one kind of the second component or may contain a plurality of kinds of the second components.

The amino acid may be any of an acidic amino acid, a neutral amino acid, and a basic amino acid. The amino acid may be a polar amino acid or a non-polar amino acid. The amino acid may also contain sulfur.

Examples of the amino acid include glutamic acid, aspartic acid, histidine, arginine, lysine, glycine, alanine, valine, leucine, isoleucine, threonine, phenylalanine, tyrosine, tryptophan, proline, serine, glutamine, asparagine, 5-aminolevulinic acid, γ-aminobutyric acid, cysteine, methionine, and ornithine. Among these, glutamic acid and arginine are preferred. The abiotic stress tolerance improver may contain only one kind of amino acid or may contain a plurality of kinds of amino acids.

The peptide is a peptide having a length of from 2 to 10 amino acids, and preferably a peptide having a length of from 2 to 6 amino acids. The peptide is preferably glutathione such as oxidized glutathione or reduced glutathione. The abiotic stress tolerance improver may contain only one kind of peptide or may contain a plurality of kinds of peptides.

The betaine is preferably an N-alkyl substitution product of an amino acid, more preferably an N-trialkyl substitution product of an amino acid, and even more preferably an N-trimethyl substitution product of an amino acid. Examples of the betaine include N-alkyl substitution products, preferably N-trialkyl substitution products, and more preferably N-trimethyl substitution products of glutamic acid, aspartic acid, histidine, arginine, lysine, glycine, alanine, valine, leucine, isoleucine, threonine, phenylalanine, tyrosine, tryptophan, proline, serine, glutamine, asparagine, 5-aminolevulinic acid, γ-aminobutyric acid, cysteine, methionine, and ornithine, and carnitine. Preferred examples of the betaine include glycine betaine, alanine betaine, and glutamic acid betaine. The abiotic stress tolerance improver may contain only one kind of betaine or may contain a plurality of kinds of betaines.

Examples of the organic acid include carboxylic acids, sulfonic acids, phenols, and thiols. The abiotic stress tolerance improver may contain only one kind of organic acid or may contain a plurality of kinds of organic acids.

The carboxylic acid preferably has 1 or more and 10 or less carbons, and more preferably 1 or more and 6 or less carbons. The carboxylic acid may be a monocarboxylic acid, a dicarboxylic acid, or a tricarboxylic acid. Specific examples of the carboxylic acid include lactic acid, glycolic acid, formic acid, acetic acid, propionic acid, butyric acid, oxalic acid, malonic acid, succinic acid, adipic acid, citric acid, glutaric acid, malic acid, ascorbic acid, tartaric acid, fumaric acid, maleic acid, pyruvic acid, and benzoic acid. Among these, acetic acid, citric acid, and maleic acid are preferred.

Examples of the phenol include phenol and aminophenol.

Examples of the sulfonic acid include methanesulfonic acid, ethanesulfonic acid, propanesulfonic acid, butanesulfonic acid, pentanesulfonic acid, hexanesulfonic acid, benzenesulfonic acid, and toluenesulfonic acid.

Examples of the salt of organic acid include alkali metal salts such as sodium salts and lithium salts, and alkaline earth metal salts such as magnesium salts and calcium salts of the above-mentioned organic acids.

From the viewpoint of enhancing the synergistic effect with the first component, the organic acid or the salt thereof is preferably a carboxylic acid or a salt thereof, more preferably a carboxylic acid having from 1 to 10 carbons or a salt thereof, and even more preferably acetic acid, citric acid, or maleic acid, or a salt thereof.

A nucleobase is a base contained in a nucleotide molecule that constitutes a deoxyribonucleic acid or a ribonucleic acid. Examples of the nucleobase include guanine, thymine, uracil, adenine, and cytosine. Among these, guanine, thymine, and uracil are preferred. The abiotic stress tolerance improver may contain only one kind of nucleobase or may contain a plurality of kinds of nucleobases.

The vitamin may be a fat-soluble vitamin or a water-soluble vitamin. The abiotic stress tolerance improver may contain only one kind of vitamin or may contain a plurality of kinds of vitamins. When a plurality of kinds of vitamins are contained, the abiotic stress tolerance improver may contain only a plurality of kinds of fat-soluble vitamins, may contain only a plurality of kinds of water-soluble vitamins, or may contain both a fat-soluble vitamin and a water-soluble vitamin.

Examples of the fat-soluble vitamin include vitamins A, vitamins D, vitamins E, and vitamins K. Examples of vitamins D include vitamin D2, vitamin D3, and vitamin D4. Examples of the water-soluble vitamin include vitamins B such as vitamin B1, vitamin B2, vitamin B6, and vitamin B12, and vitamins C. Among these, vitamin B1 and vitamin D2 are preferable.

The sugar may be a monosaccharide, a disaccharide, or a polysaccharide. Examples of the monosaccharide include glucose, fructose, and galactose. Examples of the disaccharide include trehalose, lactose, maltose, and sucrose. Examples of the polysaccharide include cellulose and starch.

Examples of the sugar alcohol include mannitol, inositol, erythritol, xylitol, and sorbitol.

### Improvement of Abiotic Stress Tolerance

The abiotic stress tolerance improver according to the present embodiment remarkably improves abiotic stress tolerance of a plant by a synergistic effect of the first component and the second component as active ingredients. The abiotic stress means abiotic stress which is different from biotic stress such as pests, diseases, weeds, and thinning. Examples of the abiotic stress include high temperature stress, low temperature stress, freezing stress, salt stress, excessive nutrient stress, drought stress, excessive water stress, ultraviolet stress, weak light stress, intense light stress, excessive mowing stress, foot traffic stress, hail stress, and strong wind stress. The abiotic stress tolerance improver improves tolerance of a plant treated therewith to these abiotic stresses, for example, high-temperature stress.

In addition, the abiotic stress tolerance improver can also suppress a decrease in plant yield, suppress a decrease in plant height or a decrease in plant height growth rate, due to abiotic stress, suppress a decrease in the number of flowers due to environmental stress, and suppress a decrease in overground part weight and underground part weight, by improving tolerance to abiotic stress.

The abiotic stress tolerance improver may be used for treating any plant. Examples of the plant include: Poaceae such as rice, wheat, barley, rye (triticale), oats, triticale, corn, sorghum, sugar cane, turf, bentgrass, bermudagrass, fescue, and ryegrass; Legumes such as soybean, peanut, kidney bean, pea, adzuki bean, and alfalfa; Convolvulaceae such as sweet potato; Solanaceae such as capsicum, sweet pepper, tomato, eggplant, potato, and tobacco; Polygonaceae such as buckwheat; Asteraceae such as sunflower; Araliaceae such as ginseng; Brassicaceae such as rapeseed, broccoli, Chinese cabbage, turnip, cabbage, arugula, Japanese radish, and radish; Chenopodiaceae such as sugar beet; Malvaceae such as cotton; Rubiaceae such as coffee tree; Sterculiaceae such as cacao; Theaceae such as tea; Cucurbitaceae such as watermelon, melon, cucumber, and pumpkin; Liliaceae such as onion, welsh onion, and garlic; Rosaceae such as strawberry, apple, almond, apricot, plum, yellow peach, Japanese plum, peach, and pear; Apiaceae such as carrot; Araceae such as taro; Anacardiaceae such as mango; Bromeliaceae such as pineapple; Caricaceae such as papaya; Ebenaceae such as persimmon; Ericaceae such as blueberry; Juglandaceae such as pecan; Musaceae such as banana; Oleaceae such as olive; Palmae such as coconut and date; Rutaceae such as mandarin orange, orange, grapefruit, and lemon; Vitaceae such as grape; flowers and ornamental plants; trees other than fruit trees; and other ornamental plants.

The plant may be any of wild plants, cultivars, plants and cultivars bred by known hybridization or plasmogamy, and genetically recombined plants and cultivars obtained by gene manipulation. Examples of the genetically recombined plants and cultivars obtained by gene manipulation include herbicide-tolerant crops, pest-resistant crops in which an insecticidal protein-producing gene is recombined, pathogen-resistant crops in which a pathogen resistance derivative-producing gene is recombined, taste-improved crops, yield-improved crops,preservation-improved crops, and yield-improved crops. Examples of the genetically recombined cultivars that have been approved in each country include various cultivars accumulated in the database of the International Service for the Acquisition of Agri-biotech Applications (ISAAA). Specific examples thereof include cultivars under the trade names of: AgriSure, AgriSure 3000GT, AgriSure 3122 E-Z Refuge, AgriSure 3122 Refuge Renew, AgriSure Artesian 3030A, AgriSure Artesian 3011A, AgriSure Duracade, AgriSure Duracade 5222 E-Z Refuge, AgriSure GT, AgriSure GT/CB/LL, AgriSure RW, AgriSure Viptera 3110, AgriSure Viptera 3111, AgriSure Viptera 3220 E-Z Refuge, AgriSure Viptera 3220 Refuge Renew, BiteGard, Bollgard, Bollgard II, Bollgard II/Roundup Ready, Bollgard 3 XtendFlex Cotton, Bollgard Cotton, Bollgard/Roundup Ready Cotton, B.t., B.t/BXN Cotton, B.t. Maize, BtXtra, BXN, BXN Canola, BXN Cotton, Clearfield, DroughtGard, Enlist, Enlist Cotton, Enlist WideStrike 3 Cotton, Genuity, Genuity Bollgard II XtendFlex, Genuity Intacta RR2 Pro, Genuity SmartStax, Genuity SmartStax RIB Complete, Genuity VT Double Pro, Genuity VT Double Pro RIB Complete, Genuity VT Triple Pro, Genuity VT Triple Pro RIB Complete, GlyTol, GlyTol Cotton, Herculex, Herculex 1, Herculex RW, Herculex XTRA, IMI, IMI Canola, InVigor, KnockOut, Liberty Link, Liberty Link Conola, Liberty Link cotton, NatureGard, Newleaf, Nucotn, Optimum, Optimum AcreMax, Optimum AcreMax I, Optimum AcreMax-R, Optimum AcreMax RW, Optimum AcreMax RW-R, Optimum AcreMax Xtra-R, Optimum AcreMax Xtreme-R, Optimum AcreMax Xtreme, Optimum Intrasect, Optimum Intrasect Xtra, Optimum Intrasect Xtreme, Optimum Leptra, Optimum TRIsect, Poast Compatible, Powercore, Powercore Corn, Powercore Corn Refuge Advanced, Protecta, Roundup Ready, Roundup Ready 2, Roundup Ready Conola, Roundup Ready Cotton, Roundup Ready Xtend, Roundup Ready/YieldGard, RR Flex/Bollgard II, SCS, SmartStax, SmartStax Refuge Advanced, StarLink, Twinlink, VipCot, VipCot Cotton, WideStrike, WideStrike 3, YieldGard, YieldGard Corn Borner, YieldGard Rootworm, YieldGard Plus, and YieldGard VT Triple.

### Other Components

The first component and the second component can be distributed on the market as formulations of various forms that contain the first component and the second component as active ingredients, and further contain other formulation aids or other active ingredients. The active components themselves may be used as formulations, or may be formulated in various forms together with other formulation aids or other active ingredients. The form is not particularly limited and only needs to be selected depending on the treatment method. Examples of the form include a dustable powder, a granule, a dust-granule mixture, a wettable powder, a water soluble powder, an emulsifiable concentrate, a soluble concentrate, an oil miscible liquid/powder, an aerosol, a microcapsule suspension, a paste, a liniment, a smoke generator, a gas generator, and an ultra-low volume formulation.

### Formulation Aids

Examples of the formulation aid include a carrier, a surfactant, and other formulation aids.

The carrier may be a solid carrier or liquid carrier.

Examples of the solid carrier include various powder carriers and granular carriers including: minerals such as clay, talc, diatomaceous earth, zeolite, montmorillonite, bentonite, kaolinite, kaolin, pyrophyllite, agalmatolite, acid clay, activated clay, attapulgite, attapulgus clay, limestone, calcite, marble, vermiculite, perlite, pumice, silica stone, silica sand, sericite, and porcelain stone; synthetic organic substances such as urea; salts such as calcium carbonate, sodium carbonate, magnesium carbonate, sodium sulfate, ammonium sulfate, potassium chloride, slaked lime, and baking soda; synthetic inorganic substances such as amorphous silica (e.g., white carbon and fumed silica) and titanium dioxide; plant carriers such as wood flour, corn stalk (cob), walnut shell (nut shell), fruit core, rice hull, coconut shell, sawdust, bran, soy flour, powdered cellulose, starch, dextrin, and sugars (e.g., lactose and sucrose); and various polymeric carriers such as crosslinked lignin, cationic gel, gelatin gelated by heat or a polyvalent metal salt, water-soluble polymer gel (e.g., agar), chlorinated polyethylene, chlorinated polypropylene, polyvinyl acetate, polyvinyl chloride, ethylene-vinyl acetate copolymers, and urea-aldehyde resins.

Examples of the liquid carrier include aliphatic solvents such as paraffins (normal paraffin, iso-paraffin, naphthene); aromatic solvents such as xylene, alkylbenzene, alkylnaphthalene, and solvent naphtha; mixed solvents such as kerosene; machine oils such as refined high-boiling point aliphatic hydrocarbons; alcohols such as methanol, ethanol, isopropanol, butanol, and cyclohexanol; polyhydric alcohols such as ethylene glycol, diethylene glycol, propylene glycol, dipropylene glycol, hexylene glycol, polyethylene glycol, and polypropylene glycol; polyhydric alcohol derivatives such as propylene-based glycol ether; ketones such as acetone, acetophenone, cyclohexanone, methylcyclohexanone, and γ-butyrolactone; esters such as fatty acid methyl ester (coconut oil fatty acid methyl ester), ethylhexyl lactate, propylene carbonate, and dibasic acid methyl ester (succinic acid dimethyl ester, glutamic acid dimethyl ester, and adipic acid dimethyl ester); nitrogen-containing solvents such as N-alkylpyrrolidones and acetonitrile; sulfur-containing solvents such as dimethyl sulfoxide; oils and fats such as coconut oil, soybean oil, and rapeseed oil; amide-based solvents such as dimethylformamide, N,N-dimethyloctaneamide, N,N-dimethyldecaneamide, methyl 5-(dimethylamino)-2-methyl-5-oxo-valerate, and N-acylmorpholine-based solvents (e.g., CAS No. 887947-29-7); and water.

As the surfactant, various surfactants such as nonionic surfactants, anionic surfactants, cationic surfactants, amphoteric surfactants, silicone-based surfactants, fluorosurfactants, and biosurfactants can be used.

Examples of the nonionic surfactant include sorbitan fatty acid esters, polyoxyethylene sorbitan fatty acid esters, sucrose fatty acid esters, polyoxyethylene fatty acid esters, polyoxyethylene resin acid esters, polyoxyethylene fatty acid diesters, polyoxyethylene alkyl ethers, polyoxyethylene alkylphenyl ethers, polyoxyethylene dialkyl phenyl ethers, polyoxyethylene alkyl phenyl ether formalin condensates, polyoxyethylene/polyoxypropylene block polymers, alkyl polyoxyethylene/polyoxypropylene block polymer ethers, alkyl phenyl polyoxyethylene/polyoxypropylene block polymer ethers, polyoxyethylene alkylamines, polyoxyethylene fatty acid amides, polyoxyethylene fatty acid bisphenyl ethers, polyoxyethylene benzylphenyl (or phenylphenyl) ethers, polyoxyethylene styrylphenyl (or phenylphenyl) ethers, polyoxyethylene castor oils, polyoxyethylene hydrogenated castor oils, and alkyl glycosides.

Examples of the anionic surfactant include sulfates such as alkyl sulfates, polyoxyethylene alkyl ether sulfates, polyoxyethylene alkylphenyl ether sulfates, polyoxyethylene benzyl (or styryl) phenyl (or phenylphenyl) ether sulfates, and polyoxyethylene/polyoxypropylene block polymer sulfates; sulfonates such as paraffin (alkane) sulfonates, α-olefin sulfonates, dialkyl sulfosuccinates, alkylbenzene sulfonates, mono- or dialkyl naphthalene sulfonates, naphthalene sulfonate-formalin condensates, alkyl diphenyl ether disulfonates, lignin sulfonates, polyoxyethylene alkyl phenyl ether sulfonates, and polyoxyethylene alkyl ether sulfosuccinic acid half esters; carboxylates such as fatty acids, resin acids, polycarboxylic acids, alkyl ether carboxylates, alkenyl succinic acids, N-acylamino acids, and naphthenic acids; and phosphates such as polyoxyethylene alkyl ether phosphates, polyoxyethylene mono- or dialkyl phenyl ether phosphates, polyoxyethylene benzyl (or styryl) phenyl (or phenylphenyl) ether phosphates, polyoxyethylene/polyoxypropylene block polymer phosphates, and alkyl phosphates.

Examples of the cationic surfactant include salts of amines such as alkylamines and alkyl pentamethyl propylene diamine; and salts of ammoniums such as alkyltrimethylammonium, methyl polyoxyethylene alkylammonium, alkyl pyridinium, mono- or di-alkyl methylated ammonium, alkyl dimethyl benzalkonium, and benzethonium (octylphenoxyethoxyethyl dimethylbenzyl ammonium).

Examples of the amphoteric surfactant include dialkyldiamino ethyl betaines, alkyldimethyl benzyl betaines, and lecithins (such as phosphatidylcholine and phosphatidylethanolamine).

Examples of the silicone-based surfactant include trisiloxane ethoxylates.

Examples of the fluorosurfactant include perfluoroalkyl carboxylates, perfluoroalkyl sulfonates, and perfluoroalkyl trimethylammonium salts.

Examples of the biosurfactant include sophorolipids, rhamnolipids, trehalose lipids, mannosyl alditol lipids, cellobiose lipids, glucose lipids, oligosaccharide fatty acid esters, spiculisporic acids, corynomycolic acids, agaricic acids, surfactin, serrawettin, viscosin, lichenysin, arthrofactin, emulsan, and alasan.

Examples of the other formulation aids include inorganic salts used as pH adjusters (e.g., sodium and potassium); water-soluble salts such as common salt; xanthan gum, guar gum, carboxymethyl cellulose, polyvinylpyrrolidone, carboxyvinyl polymers, acrylic polymers, polyvinyl alcohols, starch derivatives, water-soluble polymers (e.g., polysaccharides), alginic acid and salts thereof, which are used as thickeners; metal stearates, sodium tripolyphosphate, and sodium hexametaphosphate, which are used as disintegrating dispersants; benzoic acid and salts thereof, sorbic acid and salts thereof, propionic acid and salts thereof, p-hydroxybenzoic acid, methyl p-hydroxybenzoate, and 1,2-benzothiazolin-3-one, which are used as preservatives; sodium polyphosphate, sodium polyacrylate, sodium ligninsulfonate, sodium citrate, sodium gluconate/glucoheptonate, ethylene diamine tetraacetic acid and disodium and ammonium salts thereof, which are used as sequesterants; pigments and dyes used as colorants; fluorine-based defoamers, silicone-based defoamers, and ethylene oxide/propylene oxide copolymers, which are used as defoamers; phenol-based antioxidants, amine-based antioxidants, sulfur-based antioxidants, and phosphoric acid-based antioxidants, which are used as antioxidants; salicylic acid-based UV absorbers and benzophenone-based UV absorbers, which are used as UV absorbers; quicklime and magnesium oxide, which are used as desiccants; and adjuvants, chemical damage reducers, and deterioration inhibitors.

### Other Active Ingredients

Examples of the other active ingredients include active ingredients contained in biostimulants, plant growth regulators, fungicides, insecticides, miticides, nematicides, and herbicides. Note that when another biostimulant is used in combination with the first component and the second component, it is also possible to further enhance the tolerance to abiotic stress and to further enhance the growth promoting effect.

Examples of the biostimulants include seaweed extract, corn extract, microalgae, mycorrhizal fungus, humic acid, fulvic acid, oxidized glutathione, L-proline, glycine betaine, 5-aminolevulinic acid, 2-hexenal, trehalose, silicic acid, nicotinic acid, acetic acid, and ethanol.

Examples of the plant growth regulators include aminoethoxyvinylglycine, chlormequat, chlorpropham, cyclanilide, dikegulac, daminozide, ethephon, flurprimidol, flumetralin, forchlorfenuron, gibberellin, mepiquat chloride, methylcyclopropene, benzylaminopurine, paclobutrazol, prohexadione, thidiazuron, tributylphosphorotrithioate, trinexapac-ethyl, uniconazole, sodium 1-naphthaleneacetate, 1-naphthylacetamide, 1-methylcyclopropene, 4-chlorophenoxyacetic acid (4-CPA), ethyl 2-methyl-4-chlorophenoxybutyrate (MCPB), isoprothiolane, indolebutyric acid, ethychlozate, calcium formate, chlormequat, choline, cyanamide, dichlorprop, decyl alcohol, sorbitan trioleate, nicosulfuron, pyraflufen-ethyl, butralin, prohydrojasmon, anisifluprin, and pendimethalin.

Examples of the fungicides include nucleic acids metabolism inhibitors, fungicides acting on cytoskeleton and motor proteins, respiration inhibitors, amino acids and protein synthesis inhibitors, signal transduction inhibitors, lipid synthesis or transport/membrane integrity or function inhibitors, membrane sterol biosynthesis inhibitors, cell wall biosynthesis inhibitors, melanin synthesis inhibitors, host plant defense inducers, chemical multi-site inhibitors, and biopesticides/agrochemicals of biological origin with multiple modes of action.

Specific examples of the nucleic acids metabolism inhibitors include benalaxyl, benalaxyl-M or kiralaxyl, furalaxyl, metalaxyl, metalaxyl-M or mefenoxam, ofurace, oxadixyl, bupirimate, dimethirimol, ethirimol, hymexazole, octhilinone, and oxolinic acid.

Examples of the fungicides acting on cytoskelton and motor proteins include benomyl, carbendazim, fuberidazole, thiabendazole, thiophanate, thiophanate-methyl, diethofencarb, ethaboxam, pencycuron, zoxamide, fluopicolide, fluopimomide, phenamacril, metrafenone, and pyriofenone.

Examples of the respiration inhibitors include diflumetorim, fenazaquin, tolfenpyrad, benodanil, benzovindiflupyr, bixafen, boscalid, carboxin, fenfuram, flubeneteram, fluindapyr, fluopyram, flutolanil, fluxapyroxad, furametpyr, inpyrfluxam, isofetamid, isoflucypram, isopyrazam, mepronil, oxycarboxin, penflufen, penthiopyrad, pydiflumetofen, pyrapropoyne, pyraziflumid, sedaxane, thifluzamide, azoxystrobin, coumoxystrobin, dimoxystrobin, enestrobin, enoxastrobin, famoxadone, fenamidone, fenaminstrobin, flufenoxystrobin, fluoxastrobin, kresoxim-methyl, mandestrobin, metominostrobin, metyltetraprole, orysastrobin, picoxystrobin, pyraclostrobin, pyrametostrobin, pyraoxystrobin, pyribencarb, triclopyricarb, trifloxystrobin, amisulbrom, cyazofamid, fenpicoxamid, florylpicoxamid, metarylpicoxamid, binapacryl, dinocap, fluazinam, meptyldinocap, fentin acetate, fentin chloride, fentin hydroxide, silthiofam, and ametoctradin.

Examples of the amino acids and protein synthesis inhibitors include cyprodinil, mepanipyrim, pyrimethanil, blasticidin-S, kasugamycin, streptomycin, and oxytetracycline.

Examples of the signal transduction inhibitors include proquinazid, quinoxyfen, fludioxonil, chlozolinate, dimetachlone, fenpiclonil, iprodione, procymidone, and vinclozolin.

Examples of the lipid synthesis or transport/membrane integrity or function inhibitors include edifenphos (EDDP), iprobenfos (IBP), isoprothiolane, pyrazophos, biphenyl, chloroneb, dicloran (CNA), etridiazole, quintozene (PCNB), tecnazene (TCNB), tolclofos-methyl, iodocarb, propamocarb, prothiocarb, extracts of Melaleuca alternifolia (tea tree), plant oil mixtures (eugenol, geraniol, thymol), natamycin (pimaricin), fluoxapiprolin, and oxathiapiprolin.

Examples of the sterol biosynthesis inhibitors include azaconazole, bitertanol, bromuconazole, cyproconazole, difenoconazole, diniconazole, epoxiconazole, etaconazole, fenbuconazole, fluoxytioconazole, fluquinconazole, flusilazole, flutriafol, hexaconazole, imazalil, imibenconazole, ipconazole, ipfentrifluconazole, mefentrifluconazole, metconazole, myclobutanil, oxpoconazole, pefurazoate, penconazole, prochloraz, propiconazole, prothioconazole, simeconazole, tebuconazole, tetraconazole, triadimefon, triadimenol, triflumizole, triticonazole, fenarimol, nuarimol, pyrifenox, pyrisoxazole, triforine, methyl-(2RS)-2-[2-chloro-4-(4-chlorophenoxy)phenyl]-2-hydroxy-3-(1H-1,2,4-triazol-1-yl)propanoate, 1-((1H-1,2,4-triazol-1-yl)methyl)-5-(4-chlorobenzyl)-2-(chloromethyl)-2-methylcyclopentan-1-ol, methyl 2-((1H-1,2,4-triazol-1-yl)methyl)-3-(4-chlorobenzyl)-2-hydroxy-1-methylcyclopentane-1-carboxylate, aldimorph, dodemorph, fenpropimorph, tridemorph, fenpropidin, piperalin, spiroxamine, fenhexamid, fenpyrazamine, pyributicarb, naftifine, and terbinafine.

Examples of the cell wall biosynthesis inhibitors include polyoxin, benthiavalicarb (benthiavalicarb-isopropyl), dimethomorph, flumorph, iprovalicarb, mandipropamid, pyrimorph, and valifenalate.

Examples of the melanin synthesis inhibitors include fthalide, pyroquilon, tricyclazole, carpropamid, diclocymet, fenoxanil, and tolprocarb.

Examples of the host plant defense inducers include acibenzolar-S-methyl, probenazole, tiadinil, isotianil, laminarin, Reynoutria sachalinensis extracts, Bacillus mycoides isolate J, cell wall of Saccharomyces cerevisiae strain LAS117, fosetyl (fosetyl-aluminum, fosetyl potassium, fosetyl sodium), phosphoric acid and salts thereof, and dichlobentiazox.

Examples of the chemical multi-site inhibitors include ferbam, mancozeb, maneb, metiram, propineb, thiuram, zinc thiazole, zineb, ziram, amobam, anilazine, dithianon, dichlofluanid, tolylfluanid, guazatine, iminoctadine acetate, iminoctadine albesilate, copper or various copper salts (e.g., copper oxychloride, copper (II) hydroxide, basic copper sulfate, copper sulfate, organocopper (oxine-copper), copper nonylphenolsulfonate, DBEDC), sulfur, captan, captafol, folpet, chlorothalonil (TPN), quinoxaline (chinomethionate), fluoroimide, and methasulfocarb.

Examples of the biopesticides/agrochemicals of biological origin with multiple modes of action include Bacillus subtilis strain AFS032321, Bacillus amyloliquefaciens strain QST713, Bacillus amyloliquefaciens strain FZB24, Bacillus amyloliquefaciens strain MBI600, Bacillus amyloliquefaciens strain D747, Bacillus amyloliquefaciens strain F727, Clonostachys rosea strain CR-7, Gliocladium catenulatum strain J1446, Pseudomonas chlororaphis strain AFS009, Streptomyces griseoviridis strain K61, Streptomyces lydicus strain WYEC108, Trichoderma atroviride strain I-1237, Trichoderma atroviride strain LU132, Trichoderma atroviride strain SC1, Trichoderma asperellum strain T34, extracts from Swinglea glutinosa, and extracts from the cotyledons of lupin saplings.

Examples of other compounds for use in fungicides include chloroinconazide, seboctylamine, flumetylsulforim, flufenoxadiazam, cyflufenamid, cymoxanil, diclomezine, dipymetitrone, dodine, fenitropan, ferimzone, flusulfamide, flutianil, harpin, inorganic salts (hydrogencarbonates (sodium hydrogencarbonate, potassium hydrogencarbonate), potassium carbonate), ipflufenoquin, KINOPROL, materials of natural origin, machine oils, organic oils, picarbutrazox, pyridachlometyl, quinofumelin, tebufloquin, tecloftalam (bactericides), triazoxide, validamycin, aminopyrifen, and shiitake mycelial extract.

Examples of the insecticides include acetylcholinesterase (AChE) inhibitors, GABA-gated chloride channel blockers, sodium channel modulators, nicotinic acetylcholine receptor (nAChR) competitive modulators, nicotinic acetylcholine receptor (nAChR) allosteric modulators, glutamate-gated chloride channel (GluCl) allosteric modulators, juvenile hormone mimics, miscellaneous non-specific (multi-site) inhibitors, chordotonal organ TRPV channel modulators, mite growth inhibitors affecting CHS1, microbial disruptors of insect midgut membranes, inhibitors of mitochondrial ATP synthase, uncouplers of oxidative phosphorylation via disruption of proton gradient, nicotinic acetylcholine receptor (nAChR) channel blockers, inhibitors of chitin biosynthesis affecting CHS1, inhibitors of chitin biosynthesis (type 1), molting disruptors (dipteran), molting hormone (ecdysone) receptor agonists, octopamine receptor agonists, mitochondrial complex III electron transport inhibitors, mitochondrial complex I electron transport inhibitors (METI), voltage-dependent sodium channel blockers, inhibitors of acetyl CoA carboxylase, mitochondrial complex IV electron transport inhibitors, mitochondrial complex II electron transport inhibitors, ryanodine receptor modulators, chordotonal organ modulators, GABA-gated chloride channel allosteric modulators, and baculoviruses.

Specifically, examples of the acetylcholinesterase (AChE) inhibitors include alanycarb, aldicarb, bendiocarb, benfuracarb, butocarboxim, butoxycarboxim, carbaryl (NAC), carbofuran, carbosulfan, ethiofencarb, fenobucarb (BPMC), fenothiocarb, formetanate, furathiocarb, isoprocarb (MIPC), methiocarb, methomyl, metolcarb (MTMC), oxamyl, pirimicarb, propoxur (PHC), thiodicarb, thiofanox, triazamate, trimethacarb, XMC, xylylcarb (MPMC), acephate, azamethiphos, azinphos-ethyl, azinphos-methyl, cadusafos, chlorethoxyfos, chlorfenvinphos (CVP), chlormephos, chlorpyrifos, chlorpyrifos-methyl, coumaphos, cyanophos (CYAP), demeton-S-methyl, diazinon, dichlorvos (DDVP), dicrotophos, dimethoate, dimethylvinphos, ethylthiomethon (disulfoton), EPN, ethion, ethoprophos, famphur, fenamiphos, fenitrothion (MEP), fenthion (MPP), fosthiazate, heptenophos, imicyafos, isofenphos, isopropyl O-(methoxyaminothiophosphoryl)salicylate, isoxathion, malathon (malathion), mecarbam, methamidophos, methidathion (DMTP), mevinphos, monocrotophos, naled (BRP), omethoate, oxydemeton-methyl, parathion, methyl parathion (parathion-methyl), phenthoate (PAP), phorate, phosalone, phosmet (PMP), phosphamidon, phoxim, pirimiphos-methyl, profenofos, propetamphos, prothiofos, pyraclofos, pyridaphenthion, quinalphos, sulfotep, tebupirimfos, temephos, terbufos, tetrachlorvinphos (CVMP), thiometon, triazophos, trichlorfon (DEP), and vamidothion.

Examples of the GABA-gated chloride channel blockers include chlordane, benzoepin (endosulfan), dienochlor, ethiprole, fipronil, pyriprole, and nicofluprole.

Examples of the sodium channel modulators include acrinathrin, allethrin (allethrin, d-cis-trans-, d-trans-isomers), bifenthrin, bioallethrin (bioallethrin, S-cyclopentenyl-isomers), bioresmethrin, chloroprallethrin, chlorfenson, cycloprothrin, cyfluthrin (cyfluthrin, β-isomers), cyhalothrin (cyhalothrin, λ-, γ-isomers), cypermethrin (cypermethrin, α-, β-, θ-, ζ-isomers), cyphenothrin [(1R)-trans-isomers], deltamethrin, dimefluthrin, empenthrin [(EZ)-(1R)-isomers], esfenvalerate, etofenprox, fenpropathrin, fenvalerate, flubrocythrinate, flucythrinate, flumethrin, fluvalinate (τ-fluvalinate), halfenprox, imiprothrin, kadethrine, metofluthrin, momfluorothrin, epsilon-metofluthrin, epsilon-momfluorothrin, permethrin, phenothrin [(1R)-trans isomer], prallethrin, profluthrin, pyrethrin, resmethrin, silafluofen, tefluthrin, phthalthrin (tetramethrin), tetramethrin [(1R)-isomers], tralomethrin, transfluthrin, DDT, methoxychlor, aldrin, dieldrin, and lindane (lindene).

Examples of the nicotinic acetylcholine receptor (nAChR) competitive modulators include acetamiprid, clothianidin, dinotefuran, imidacloprid, nitenpyram, thiacloprid, thiamethoxam, nicotine sulfate (nicotine), sulfoxaflor, flupyradifurone, dicloromezotiaz, fenmezoditiaz, and triflumezopyrim.

Examples of the nicotinic acetylcholine receptor (nAChR) allosteric modulators include spinetoram, spinosad, flupyrimin, and GS-omega/kappa HXTX-Hv1a peptide.

Examples of the glutamate-gated chloride channel (GluCl) allosteric modulators include abamectin, emamectin benzoate, lepimectin, and milbemectin.

Examples of the juvenile hormone mimics include hydroprene, kinoprene, methoprene, fenoxycarb, and pyriproxyfen.

Examples of the miscellaneous non-specific (multi-site) inhibitors include methyl bromide, other alkyl halides, chloropicrin, sodium aluminum fluoride, sulfuryl fluoride, borax, boric acid, disodium octaborate, sodium metaborate, tartar emetic, dazomet, carbam (metam-ammonium), metam-sodium (carbam sodium), and methyl isothiocyanate.

Examples of the chordotonal organ TRPV channel modulators include pymetrozine, pyrifluquinazon, and afidopyropen.

Examples of the mite growth inhibitors affecting CHS1 include clofentezine, diflovidazin, hexythiazox, and etoxazole.

Examples of the microbial disruptors of insect midgut membranes include Bacillus thuringiensis subsp. israelensis, Bacillus thuringiensis subsp. aizawai, Bacillus thuringiensis subsp. kurstaki, Bacillus thuringiensis subsp. tenebrionis, proteins contained in B.t. crops (Cry1Ab, Cry1Ac, Cry1Fa, Cry1A. 105, Cry2Ab, Vip3A, mCry3A, Cry3Bb, and Cry34Ab1/Cry35Ab1), and Bacillus sphaericus.

Examples of the inhibitors of mitochondrial ATP synthase include diafenthiuron, azocyclotin, tricyclohexyltin hydroxide (cyhexatin), fenbutatin oxide, propargite (BPPS), and tetradifon.

Examples of the uncouplers of oxidative phosphorylation via disruption of proton gradient include chlorfenapyr, DNOC, and sulfluramid.

Examples of the nicotinic acetylcholine receptor (nAChR) channel blockers include bensultap, cartap hydrochloride, thiocyclam, thiosultap sodium, and monosultap.

Examples of the inhibitors of chitin biosynthesis affecting CHS1 include bistrifluron, chlorfluazuron, diflubenzuron, flucycloxuron, flufenoxuron, hexaflumuron, lufenuron, novaluron, noviflumuron, teflubenzuron, and triflumuron.

Examples of the inhibitors of chitin biosynthesis (type 1) include buprofezin.

Examples of the molting disruptors (dipteran) include cyromazine.

Examples of the molting hormone (ecdysone) receptor agonists include chromafenozide, halofenozide, methoxyfenozide, and tebufenozide.

Examples of the octopamine receptor agonists include amitraz.

Examples of the mitochondrial complex III electron transport inhibitors include hydramethylnon, acequinocyl, fluacrypyrim, flupyroxystrobin, and bifenazate.

Examples of the mitochondrial complex I electron transport inhibitors (METI) include fenazaquin, fenpyroximate, pyridaben, pyrimidifen, tebufenpyrad, tolfenpyrad, and derris (rotenone).

Examples of the voltage-dependent sodium channel blockers include indoxacarb and metaflumizone.

Examples of the inhibitors of acetyl CoA carboxylase include spirodiclofen, spiromesifen, spiropidion, spidoxamat, spirobudifen, and spirotetramat.

Examples of the mitochondrial complex IV electron transport inhibitors include aluminum phosphide, calcium phosphide, phosphine, zinc phosphide, prussic acid (calcium cyanide, sodium cyanide), and potassium cyanide.

Examples of the mitochondrial complex II electron transport inhibitors include cyenopyrafen, cyetpyrafen, cyflumetofen, pyflubumide, and cyclobutrifluram.

Examples of the ryanodine receptor modulators include chlorantraniliprole, cyantraniliprole, cyclaniliprole, flubendiamide, tetraniliprole, fluchlordiniliprole, thiorantraniliprole, pioxaniliprole, tetrachlorantraniliprole, cyhalodiamide, and cyproflanilide.

Examples of the chordotonal organ modulators include flonicamid.

Examples of the GABA-gated chloride channel allosteric modulators include broflanilide, fluxametamide, and isocycloseram.

Examples of the baculoviruses include codling moth (Cydia pomonella GV), false codling moth (Thaumatotibia leucotreta GV), velvetbean caterpillar (Anticarsis gemmatalis MNPV), and cotton bollworm (Helicoverpa armigera NPV).

Examples of the other insecticides, miticides, and nematicides include azadirachtin, benzomate (benzoximate), phenisobromolate (bromopropylate), quinoxaline system (chinomethionate), kelthane (dicofol), lime sulfur, mancozeb, pyridalyl, sulfur, acynonapyr, amidoflumet, benzpyrimoxan, fluazaindolizine, fluensulfone,fluhexafon, flupentiofenox, flometoquin, metaldehyde, tyclopyrazoflor, dimpropyridaz, trifluenfuronate, indazapyroxamet, sulfiflumin, bisulflufen, isoflualanam, piperflanilide, Burkholderia spp., Wolbachia pipientis (Zap), Chenopodium ambrosioides near ambrosioides extracts, fatty acid monoesters with glycerol or propanediol, neem oil, machine oil, rapeseed oil, blended oils, starch, saccharified reduced starch, sodium oleate, ferric phosphate, nemadectin, Beauveria bassiana strains, Metarhizium anisopliae strain (F52), Paecilomyces fumosoroseus Apopka strain (97), diatomaceous earth, dichlorodiisopropyl ether (DCIP), 1,3-dichloropropene (D-D), levamisole hydrochloride, morantel tartrate, and tioxazafen.

Examples of the herbicides include acetolactate synthesis (ALS) inhibitor compounds, amino acid-based compounds, cyclohexanedione-based compounds, acetamide-based compounds, bipyridinium-based compounds, allyloxyphenoxypropionic acid-based compounds, carbamate-based compounds, pyridine-based compounds, urea-based compounds, dinitroaniline-based compounds, protoporphyrinogen oxidase (PPO) inhibitor compounds, phenoxyacetic acid-based compounds, hydroxyphenylpyruvate dioxygenase enzyme (HPPD) inhibitor compounds, and triazine-based compounds.

Specific examples of the acetolactate synthesis (ALS) inhibitor compounds include imazamethabenz and imazamethabenz-methyl, imazamox, imazapic, imazapyr, imazaquin, imazethapyr, amidosulfuron, azimsulfuron, bensulfuron and bensulfuron-methyl, chlorimuron and chlorimuron-methyl, chlorimuron-ethyl, chlorsulfuron, cinosulfuron, cyclosulfamuron, ethametsulfuron and ethametsulfuron-methyl, ethoxysulfuron, flazasulfuron, flucetosulfuron, flupyrsulfuron, flupyrsulfuron-methyl and salts thereof, foramsulfuron, halosulfuron, halosulfuron-methyl, imazosulfuron, iodosulfuron and salts thereof, iodosulfuron-methyl and salts thereof, mesosulfuron, mesosulfuron-methyl, metazosulfuron, metsulfuron, metsulfuron-methyl, nicosulfuron, oxasulfuron, primisulfuron, primisulfuron-methyl, propyrisulfuron, prosulfuron, pyrazosulfuron, pyrazosulfuron-ethyl, rimsulfuron, sulfometuron, sulfometuron-methyl, sulfosulfuron, thifensulfuron, thifensulfuron-methyl, triasulfuron, tribenuron, tribenuron-methyl, trifloxysulfuron and salts thereof, triflusulfuron, triflusulfuron-methyl, tritosulfuron, imazamethabenz-methyl, bispyribac-sodium, cloransulam, cloransulam-methyl, diclosulam, florasulam, flucarbazone and salts thereof, flumetsulam, metosulam, orthosulfamuron, penoxsulam, pyroxsulam, propoxycarbazone and salts thereof, pyribenzoxim, pyriftalid, pyriminobac-methyl, pyrimisulfan, pyrithiobac and salts thereof, pyroxsulam, thiencarbazone, thiencarbazone-methyl, and triafamone.

Examples of the amino acid-based compounds include bialaphos and salts thereof, glufosinate and salts thereof, glufosinate P and salts thereof, and glyphosate and salts thereof.

Examples of the cyclohexanedione-based compounds include alloxydim, butroxydim, clethodim, cloproxydim, cycloxydim, profoxydim, sethoxydim, tepraloxydim, tralkoxydim, and feproxydim.

Examples of the acetamide-based compounds include napropamide, dimethachlor, pethoxamid, acetochlor, alachlor, allidochlor (CDAA), butenachlor, delachlor, diethatyl-ethyl, propisochlor, prynachlor, butachlor, dimethenamid, dimethenamid-P, metazachlor, metolachlor, S-metolachlor, pretilachlor, propachlor, thenylchlor, flufenacet, and mefenacet.

Examples of the bipyridinium-based compounds include cyperquat, morfamquat, diquat, and paraquat.

Examples of the allyloxyphenoxypropionic acid-based compounds include clodinafop, clodinafop-propargyl, clofop, cyhalofop-butyl, diclofop, diclofop-methyl, diclofop-P-methyl, fenoxaprop, fenoxaprop-ethyl, fenoxaprop-P-ethyl, fluazifop, fluazifop-butyl, fluazifop-P-butyl, haloxyfop, haloxyfop-methyl, haloxyfop-P-methyl, isoxapyrifop, metamifop, propaquizafop, quizalofop, quizalofop-ethyl, quizalofop-P-ethyl, and quizalofop-P-tefuryl.

Examples of the carbamate-based compounds include asulam, carbetamide, desmedipham, chlorprocarb, phenisopham, cycloate, dimepiperate, pebulate, tiocarbazil, vernolate, barban, chlorbufam, chlorpropham, propham, swep, phenmedipham, butylate, EPTC, esprocarb, molinate, orbencarb, prosulfocarb, pyributicarb, thiobencarb (benthiocarb) and tri-allate.

Examples of the pyridine-based compounds include aminopyralid, clopyralid, diflufenican, dithiopyr, fluridone, fluroxypyr, halauxifen, florpyrauxifen, picloram and salts thereof, picolinafen, thiazopyr, and triclopyr and salts thereof.

Examples of the urea-based compounds include benzothiazolone, bromuron, buturon, chlorbromuron, chloroxuron, difenoxuron, dimefuron, ethidimuron, fenuron, fluothiuron, metobenzuron, metobromuron, metoxuron, monolinuron, monuron (CMU), neburon, parafluron, siduron, thiazafluron, chlorotoluron, dymron, diuron (DCMU), fluometuron, isoproturon, linuron, methabenzthiazuron, tebuthiuron, cumyluron, karbutilate, and isouron.

Examples of the dinitroaniline-based compounds include benfluralin (bethrodine), butralin, dinitramine, ethalfluralin, fluchloralin, isopropalin, nitralin, profluralin, oryzalin, pendimethalin, prodiamine, and trifluralin.

Examples of the protoporphyrinogen oxidase (PPO) inhibitor compounds include acifluorfen, aclonifen, azafenidin, bifenox, chlomethoxynil, ethoxyfen, ethoxyfen-ethyl, fomesafen, fluazolate, fluoroglycofen, fluoroglycofen-ethyl, halosafen, lactofen, oxyfluorfen, butafenacil, epyrifenacil, chlornitrofen (CNP), fluorodifen, fluoronitrofen (CFNP), nitrofen (NIP), oxyfluorfen, chlorphthalim, flumipropyn, carfentrazone, carfentrazone-ethyl, cinidon-ethyl, flumiclorac-pentyl, flumioxazin, fluthiacet, fluthiacet-methyl, oxadiargyl, oxadiazon, pentoxazone, pyraclonil, pyraflufen, pyraflufen-ethyl, saflufenacil, sulfentrazone, thidiazimin, benzfendizone, profluazol, and flufenpyr-ethyl.

Examples of the phenoxyacetic acid-based compounds include 2,4,5-T, 2,4-D and salts thereof, 2,4-DB and salts thereof, clomeprop, dichlorprop, fenoprop, MCPA and salts thereof, MCPB and salts thereof, mecoprop (MCPP) and salts thereof, and mecoprop-P and salts thereof.

Examples of the hydroxyphenylpyruvate dioxygenase enzyme (HPPD) inhibitor compounds include benzobicyclon, benzofenap, bicyclopyrone, isoxaflutol, mesotrione, pyrasulfotol, pyrazolynate (pyrazolate), pyrazoxyfen, sulcotrione, tefuryltrione, tembotrione, topramezone, fenquinotrione, and tolpyralate.

Examples of the triazine-based compound include atraton, aziprotryn, chlorazine, cyprazine, desmetryn, dipropetryn, eglinazine-ethyl, ipazine, methoprotryne, procyazine, proglinazine, prometon, propazine, sebuthylazine, secbumeton, terbumeton, trietazine, ametryn, atrazine, cyanazine, dimethametryn, hexazinone, indaziflam, metamitron, metribuzin, prometryn, simazine (CAT), simetryn, terbuthylazine, terbutryn, and triaziflam.

Examples of the other herbicides include amicarbazone, ethiozin, isomethiozin, aminocyclopyrachlor, aminotriazole, anilofos, piperophos, beflubutamid, benazolin, benfuresate, bentazone, bromacil, isocil, bromobutide, bromofenoxim, bromoxynil, butamifos, DMPA, chlorthal-dimethyl (TCTP), cafenstrole, chloridazon (PAC), brompyrazon, chlorthal, clomazone, cumyluron, dicamba (MDBA) and salts thereof, chloramben, 2,3,8-TBA (TCBA), benazolin-ethyl, chlorfenac, chlorfenprop, dichlobenil (DBN), chlorthiamid (DCBN), cinmethylin, methiozolin, amitrol, flamprop-M, fosamine, methyldymron, monalide, MSMA, difenzoquat, diflufenzopyr, endothall and salts thereof, ethofumesate, etobenzanid, fenoxasulfone, fentrazamide, flupoxam, fluorochloridone, flurtamone, indanofan, tridiphane, ioxynil, ipfencarbazone, isoxaben, triaziflam, lenacil, methylarsonic acid, naptalam, flurochloridone, norflurazon, oxaziclomefone, pinoxaden, chloranocryl=dicryl, pentanochlor (CMMP), propanil, propyzamide, pyridate, pyroxasulfone, promacyl, quinclorac, quinmerac, quinoclamine, terbacil, cyclopyrimorate, florpyrauxifen-benzyl, lancotrione and salts thereof, cyclopyranil, bixlozone, tetflupyrolimet, dimesulfazet, dinosam, dinoseb (DNBP), DNOC, dinoterb, etinofen, medinoterb, DSMA, cacodylic acid, diphenamid, naproanilide, tebutam, bensulide, dalapon, TCA, mefluidide, perfluidone, CAMA, tiafenacil, trifludimoxazin, rimisoxafen, fenpyrazone, dioxopyritrione, cypyrafluone, bipyrazone, benquitrione, fluchloraminopyr, pyriflubenzoxim, flufenoximacil, iptriazopyrid, flusulfinam, broclozone, indolauxypyr, icafolin, pyraquinate, metproxybicyclone, tetrapion (flupropanate) and salts thereof, and d-limonene.

### Content

The content of the first component in the formulation can be arbitrarily determined depending on the form, the amount to be applied to a plant, and the like. For example, the formulation preferably contains the first component in an amount of 0.01 mass% or more and 90 mass% or less, and more preferably 0.1 mass% or more and 50 wt.% or less, relative to the total mass of the formulation. The formulation preferably contains the second component in an amount of 0.00001 mass% or more and 90 mass%, and more preferably 0.0001 mass% or more and 50 mass%, relative to the total mass of the formulation.

The mass ratio of the second component to the first component (second component/first component) may be 0.001 or more and 1000 or less, preferably 0.01 or more and 100 or less, more preferably 0.1 or more and 10 or less, and even more preferably 0.5 or more and 5 or less.

The formulation may be used as the treatment agent as it is, or may be used as the treatment agent prepared by, for example, mixing it with the above-mentioned formulation aids or other active ingredients.

### Production Method

The abiotic stress tolerance improver can be prepared by mixing the first component and the second component. At the time, a solid carrier or a liquid carrier may be used to prepare the formulation having a predetermined form. Note that as the first component, an extract of a microorganism, a plant, or a seaweed containing the first component may be used. As the second component, an extract of a microorganism, a plant, or a seaweed containing the second component may be used. Alternatively, an extract of a microorganism, plant, or a seaweed containing the first component and the second component may be used as the abiotic stress tolerance improver.

Note that the first component and the second component may be stored and transported in a mixed state, or the first component may be stored in a first container and the second component may be stored in a second container to be stored and transported in a separate and independent state in which the first component and the second component are not mixed. In addition, a first container containing the first component and a second container containing the second component may be packaged (kitted) as a product.

### Method for Improving Abiotic Stress Tolerance of Plant

The abiotic stress tolerance improver or the formulation containing the same, which are described above, can be used for improving abiotic stress tolerance of a plant by applying it to the plant prepared in advance.

The method of application is not particularly limited, and application may be performed by any method such as spraying to stem and leaf, mixing into water supply, spraying to soil, injection to subsoil using an injector, treatment of seeds, bulbs, tubers, and the like (propagules), or direct fertilization to plants.

When it is mixed into water supply, for example, the formulation only needs to be administered as granules or a treatment liquid to water supply to a crop or to paddy water of a paddy field. For example, the concentration of the first component in the water supply to a crop can be 0.1 mg/L or more, and is preferably 1 mg/L or more. When administered to paddy water, the dosage amount of the first component can be 0.1 g or more, and is preferably 1 g or more, per 10 a of paddy.

When spraying to stem and leaf or spraying to soil is performed, for example, a granule or the like is administered to a planting hole or its periphery at the time of seedling transplantation or the like, or a granule, a wettable powder, or the like is administered to a seed, a plant body, or soil around a plant body. After spraying to the soil, the soil and the formulation may be stirred. The dosage amount of the first component when spraying to stem and leaf or spraying to soil surface is performed can be 0.1 mg or more, and is preferably 1 mg or more, per 1 m² of an agricultural or horticultural land.

When the propagule is treated, for example, the propagule is mixed with a wettable powder or a dustable powder and stirred, or the propagule is immersed in a diluted wettable powder or the like. The propagule may also be coated with the formulation containing a solid carrier. The amount of the first component used at the time of treating the propagule can be 0.005 g or more, and is preferably 0.05 g or more, relative to 100 kg of seeds.

The treated plant can be grown under normal conditions for the growth of the plant. The plant thus grown may be further grown by transplanting a transplanting seedling grown to a certain extent into another soil or medium.

### Other embodiments

Note that the above-described embodiment is an exemplary embodiment of the present invention, and it is needless to say that the present invention can include embodiments other than the above-described embodiment within the scope of the core technical idea thereof.

### [EXAMPLES]

The present invention will be described in detail below based on examples, but the present invention is not limited to these examples.

### Evaluation Example 1: Comparison of effects on tolerance to high-temperature stress

Abiotic stress tolerance improvers of Examples 1 and 2 and Comparative Examples 1 to 3 and 5 to 7 were prepared to have the concentrations shown in Table 1 below. Commercially available products of ergothioneine (EGT), arginine (Arg), and glutamic acid (Glu) were used, and pure water was used as a solvent.

In a plastic pot having a diameter of 60 mm and a height of 55 mm, 90 mL of seedling raising soil (available from TAKII & CO., LTD.) was placed, and one individual Arabidopsis thaliana (Col-0) was sown per one pot. A plastic deep dish having a diameter of 160 mm and a height of 28 mm was prepared, and two pots were installed therein.

The light period was set to 16 hours and the dark period was set to 8 hours at an internal temperature of an artificial climate chamber set at a room temperature of 22°C. As a light condition, the light intensity was set to 5000 lx at a central portion under fluorescent light irradiation. The water supply was bottom watering and the water level was set to about 5 mm. On Day 92 after sowing, 40 mL of the abiotic stress tolerance improver was added instead of the water supply, and 2 days after that, the plants were exposed to an environment of 45°C for 1 hour, and further 3 days after that, the plants were exposed to an environment of 42°C for 3 hours to be subjected to high-temperature stress.

The number of wilted leaves of Arabidopsis thaliana subjected to high-temperature stress was counted, and a leaf wilting rate was evaluated as an index of physiological disorder. The evaluation results are indicated in Table 1. The leaf wilting rate and an abiotic stress suppression ratio (evaluation value) were calculated according to the following equations. 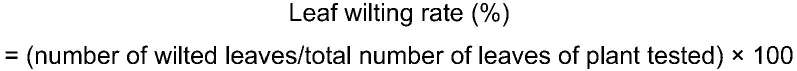 Leaf wilting rate (%) = (number of wilted leaves/total number of leaves of plant tested) × 100 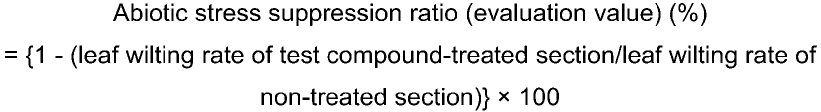 Abiotic stress suppression ratio (evaluation value) (%) = {1 - (leaf wilting rate of test compound-treated section/leaf wilting rate of non-treated section)} × 100

Then, by a method using Colby's equation (the following equation): 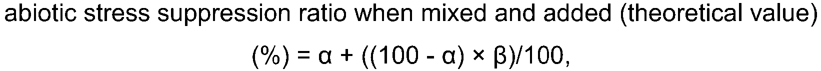 abiotic stress suppression ratio when mixed and added (theoretical value) (%) = α + ((100 - α) × β)/100, a synergistic effect of the two compounds was determined.

Note that in the above equation, α and β each represent the abiotic stress suppression ratio when each compound is added alone.

**[Table 1]**

| | EGT | Second component | | High-temperature stress | Leaf wilting rate | Abiotic stress suppression ratio | |
|---|---|---|---|---|---|---|---|
| | mM | Component name | mM | | | Evaluation value | Theoretical value when mixed |
| Example 1 | 0.1 | Arg | 0.1 | Presence | 17% | 75% | 34% |
| Example 2 | 0.1 | Glu | 0.1 | Presence | 22% | 67% | 35% |
| Comparative Example 1 | 0.1 | - | - | Presence | 48% | 28% | - |
| Comparative Example 2 | - | Arg | 0.1 | Presence | 61% | 9% | - |
| Comparative Example 3 | - | Glu | 0.1 | Presence | 60% | 10% | - |
| Comparative Example 4 | - | - | - | Presence | 67% | - | - |
| Comparative Example 5 | 0.1 | - | - | Absence | 0% | - | - |
| Comparative Example 6 | - | Arg | 0.1 | Absence | 0% | - | - |
| Comparative Example 7 | - | Glu | 0.1 | Absence | 0% | - | - |
| Comparative Example 8 | - | - | - | Absence | 0% | - | - |

As shown in Table 1, a physiological disorder of wilting was observed in 67% of the leaves of Arabidopsis thaliana subjected to high-temperature stress (Comparative Example 4). The abiotic stress tolerance improvers of Examples 1 and 2 exhibited low leaf wilting rates as compared with the abiotic stress tolerance improver containing only Arg or Glu (Comparative Examples 2 and 3) and the abiotic stress tolerance improver containing only EGT (Comparative Example 1), which indicates that the abiotic stress tolerance improvers of Examples 1 and 2 were excellent in abiotic stress suppression ratio. In addition, the abiotic stress tolerance improvers of Examples 1 and 2 had larger abiotic stress suppression ratios than the theoretical value when mixed, and a synergistic effect was thus confirmed.

### Evaluation Example 2: Comparison of effects on tolerance to ultraviolet stress

Abiotic stress tolerance improvers of Example 3 and Comparative Examples 9, 10, 12, and 13 were prepared to have the concentrations shown in Table 2 below. Commercially available products of EGT and Glu were used, and pure water was used as a solvent.

To a 9-cm petri dish on which filter paper was placed, 5 mL of pure water was added, and 10 wheat seeds were sown per one petri dish. They were managed in an artificial climate chamber set at a room temperature of 22°C, and the light period and the dark period were set to 16 hours and 8 hours, respectively. As a light condition, the light intensity was set to 5000 lx at a central portion under fluorescent light irradiation.

On Day 8 after sowing, pure water in the petri dish was removed, and 5 mL of the abiotic stress tolerance improver was then added to the petri dish. One day after the addition, ultraviolet radiation intensity at a wavelength of 254 nm under irradiation with an ultraviolet lamp (GL-15, available from TOSHIBA CORPORATION) was set to 535 µW/cm⁻², and the petri dish was exposed thereto for 1 hour to apply ultraviolet stress.

The number of died leaves was counted 5 days after the application of the ultraviolet stress, and a leaf mortality rate was evaluated as an index of physiological disorder. The evaluation results are indicated in Table 10. The leaf mortality rateand the abiotic stress suppression ratio (evaluation value) were calculated according to the following equations. 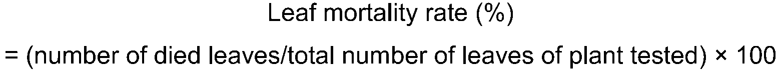 Leaf mortality rate (%) = (number of died leaves/total number of leaves of plant tested) × 100 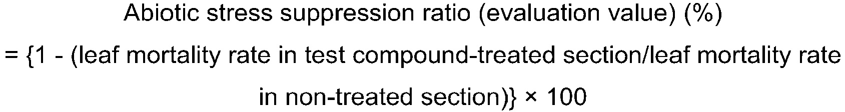 Abiotic stress suppression ratio (evaluation value) (%) = {1 - (leaf mortality rate in test compound-treated section/leaf mortality rate in non-treated section)} × 100

Then, by a method using Colby's equation (the following equation): 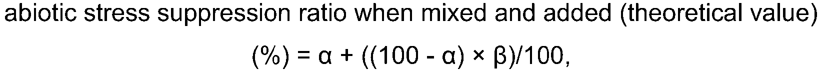 abiotic stress suppression ratio when mixed and added (theoretical value) (%) = α + ((100 - α) × β)/100, a synergistic effect of the two compounds was determined.
Note that in the above equation, α and β each represent the abiotic stress suppression ratio when each compound is added alone.

**[Table 2]**

| | EGT | Second component | | Ultraviolet stress | Leaf mortality rate | Abiotic stress suppression ratio | |
|---|---|---|---|---|---|---|---|
| | mM | Component name | mM | | | Evaluation value | Theoretical value when mixed |
| Example 3 | 0.1 | Glu | 0.5 | Presence | 29% | 40% | 19% |
| Comparative Example 9 | 0.1 | - | - | Presence | 39% | 19% | - |
| Comparative Example 10 | - | Glu | 0.5 | Presence | 49% | 0% | - |
| Comparative Example 11 | - | - | - | Presence | 48% | - | - |
| Comparative Example 12 | 0.1 | - | - | Absence | 0% | - | - |
| Comparative Example 13 | - | Glu | 0.5 | Absence | 0% | - | - |
| Comparative Example 14 | - | - | - | Absence | 0% | - | - |

As shown in Table 2, physiological disorders such as chlorosis were observed in wheat plants due to ultraviolet stress, and 48% of the leaves of the tested wheat plants died (Comparative Example 11). The abiotic stress tolerance improver of Example 3 exhibited a low leaf mortality rate as compared with the abiotic stress tolerance improver containing only Glu (Comparative Example 10) and the abiotic stress tolerance improver containing only EGT (Comparative Example 9), which indicates that the abiotic stress tolerance improver of Example 3 was excellent in abiotic stress suppression ratio. In addition, the abiotic stress tolerance improver of Example 3 had a larger abiotic stress suppression ratio than the theoretical value when mixed, and a synergistic effect was thus confirmed.

### Evaluation Example 3: Comparison of effects on tolerance to excessive water stress

Abiotic stress tolerance improvers of Examples 4 to 7 and Comparative Examples 15 to 17 and 19 to 21 were prepared to have the concentrations shown in Table 3 below. Commercially available products of EGT and Glu were used, and pure water was used as a solvent.

To a 9-cm petri dish on which filter paper was placed, 5 mL of pure water was added, and 10 rapeseed seeds were sown per one petri dish. They were managed in an artificial climate chamber set at a room temperature of 22°C, and the light period and the dark period were set to 16 hours and 8 hours, respectively. As a light condition, the light intensity was set to 5000 lx at a central portion under fluorescent light irradiation.

On Day 8 after sowing, pure water in the petri dish was removed, and 5 mL of the abiotic stress tolerance improver was then added to the petri dish. One day after the addition, 50 mL of pure water was added to the petri dish to apply excessive water stress.

The number of surviving plants was counted 10 days after the application of the excessive water stress, and the mortality rate of the plants was evaluated as an index of physiological disorder. The evaluation results are indicated in Table 3. The mortality rate and the abiotic stress suppression ratio (evaluation value) were calculated according to the following equations. 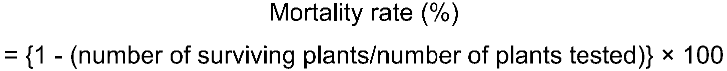 Mortality rate (%) = {1 - (number of surviving plants/number of plants tested)} × 100 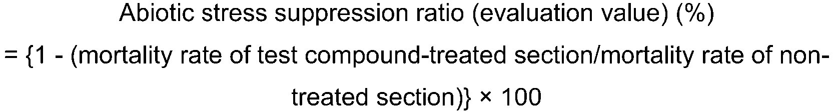 Abiotic stress suppression ratio (evaluation value) (%) = {1 - (mortality rate of test compound-treated section/mortality rate of non-treated section)} × 100

Then, by a method using Colby's equation (the following equation): 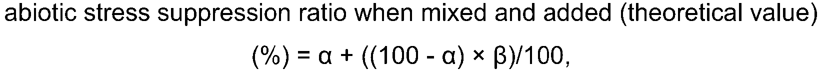 abiotic stress suppression ratio when mixed and added (theoretical value) (%) = α + ((100 - α) × β)/100, a synergistic effect of the two compounds was determined.
Note that in the above equation, α and β each represent the abiotic stress suppression ratio when each compound is added alone.

**[Table 3]**

| | EGT | Second component | | Excessive water stress | Mortality rate | Abiotic stress suppression ratio | |
|---|---|---|---|---|---|---|---|
| | mM | Component name | mM | | | Evaluation value | Theoretical value when mixed |
| Example 4 | 0.1 | Arg | 0.5 | Presence | 22% | 74% | 17% |
| Example 5 | 0.1 | Arg | 0.1 | Presence | 30% | 64% | - |
| Example 6 | 0.1 | Glu | 0.5 | Presence | 40% | 52% | 17% |
| Example 7 | 0.1 | Glu | 0.1 | Presence | 50% | 40% | - |
| Comparative Example 15 | 0.1 | - | - | Presence | 70% | 13% | - |
| Comparative Example 16 | - | Arg | 0.5 | Presence | 80% | 5% | - |
| Comparative Example 17 | - | Glu | 0.5 | Presence | 80% | 5% | - |
| Comparative Example 18 | - | - | - | Presence | 84% | - | - |
| Comparative Example 19 | 0.1 | - | - | Absence | 0% | - | - |
| Comparative Example 20 | - | Arg | 0.5 | Absence | 0% | - | - |
| Comparative Example 21 | - | Glu | 0.5 | Absence | 0% | - | - |

As shown in Table 3, physiological disorders such as chlorosis were observed in the rapeseed due to excessive water stress, and 84% of the tested rapeseed plants died (Comparative Example 18). The abiotic stress tolerance improvers of Examples 4, 5, 6, and 7 exhibited low mortality rates as compared with the abiotic stress tolerance improver containing only Arg or Glu (Comparative Examples 16 and 17) and the abiotic stress tolerance improver containing only EGT (Comparative Example 15), which indicates that the abiotic stress tolerance improvers of Examples 4, 5, 6, and 7 were excellent in abiotic stress suppression ratio. In addition, the abiotic stress tolerance improvers of Examples 4 and 6 had larger abiotic stress suppression ratios than the theoretical value when mixed, and a synergistic effect was thus confirmed.

### Evaluation Example 4: Comparison of effects on tolerance to drought stress

Abiotic stress tolerance improvers of Examples 8 to 15 and Comparative Examples 23 to 31 were prepared to have the concentrations shown in Table 4 below. Commercially available products of ergothioneine (EGT), trehalose, methionine (Met), oxidized glutathione (GSSG), γ-aminobutyric acid (GABA), citric acid, ascorbic acid (VitC), and potassium sorbate (sorbic acid) were used, and pure water was used as a solvent.

In a plastic pot having a square of 60 mm and a height of 66 mm, 150 mL of granular soil (Kumiai horticultural soil) was placed, and one individual soybean was sown per one pot. A plastic deep dish having a diameter of 160 mm and a height of 28 mm was prepared, and four pots were installed therein.

The pots were managed in a greenhouse set at a room temperature of 25°C. On Day 31 after sowing, 50 mL of the abiotic stress tolerance improver was added to the deep dish instead of water supply, and then the water supply was stopped for 5 days to apply drought stress.

The number of died leaves of the soybean subjected to the drought stress was counted, and the leaf mortality rate was evaluated as an index of physiological disorder. The evaluation results are indicated in Table 4. The leaf mortality rate and the abiotic stress suppression ratio (evaluation value) were calculated according to the following equations. 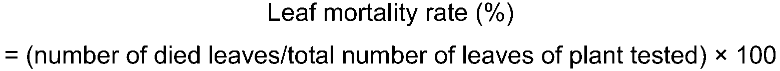 Leaf mortality rate (%) = (number of died leaves/total number of leaves of plant tested) × 100 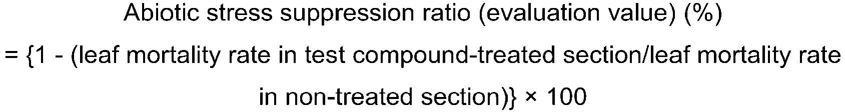 Abiotic stress suppression ratio (evaluation value) (%) = {1 - (leaf mortality rate in test compound-treated section/leaf mortality rate in non-treated section)} × 100

Then, by a method using Colby's equation (the following equation): 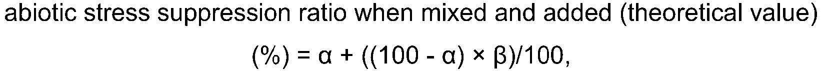 abiotic stress suppression ratio when mixed and added (theoretical value) (%) = α + ((100 - α) × β)/100, a synergistic effect of the two compounds was determined.
Note that in the above equation, α and β each represent the abiotic stress suppression ratio when each compound is added alone.

**[Table 4]**

| | EGT | Second component | | Drought stress | Leaf mortality rate | Abiotic stress suppression ratio | |
|---|---|---|---|---|---|---|---|
| | mM | Component name | mM | | | Evaluation value | Theoretical value when mixed |
| Example 8 | 0.1 | Trehalose | 0.1 | Presence | 32% | 43% | 22% |
| Example 9 | 0.1 | Met | 0.1 | Presence | 34% | 39% | 27% |
| Example 10 | 0.1 | GSSG | 0.1 | Presence | 40% | 29% | 22% |
| Example 11 | 0.1 | GABA | 0.1 | Presence | 33% | 41% | 19% |
| Example 12 | 0.1 | Citric acid | 0.1 | Presence | 35% | 38% | 27% |
| Example 13 | 0.1 | VitC | 0.01 | Presence | 42% | 25% | 22% |
| Example 14 | 0.1 | VitC | 0.1 | Presence | 37% | 34% | 20% |
| Example 15 | 0.1 | Sorbic acid | 0.1 | Presence | 46% | 18% | 7% |
| Comparative Example 23 | 0.1 | - | - | Presence | 48% | 14% | - |
| Comparative Example 24 | - | Trehalose | 0.1 | Presence | 51% | 9% | - |
| Comparative Example 25 | - | Met | 0.1 | Presence | 48% | 14% | - |
| Comparative Example 26 | - | GSSG | 0.1 | Presence | 51% | 9% | - |
| Comparative Example 27 | - | GABA | 0.1 | Presence | 53% | 5% | - |
| Comparative Example 28 | - | Citric acid | 0.1 | Presence | 48% | 14% | - |
| Comparative Example 29 | - | VitC | 0.01 | Presence | 51% | 9% | - |
| Comparative Example 30 | - | VitC | 0.1 | Presence | 52% | 7% | - |
| Comparative Example 31 | - | Sorbic acid | 0.1 | Presence | 39% | -9% | - |
| Comparative Example 32 | - | - | - | Presence | 56% | - | - |
| Comparative Example 33 | - | - | - | Absence | 0% | - | - |

As shown in Table 4, physiological disorders such as necrosis were observed in the soybean due to drought stress, and 56% of the tested soybean leaves died (Comparative Example 32). The abiotic stress tolerance improvers of Examples 8, 9, 10, 11, 12, 13, 14, and 15 exhibited low leaf mortality rates as compared with the abiotic stress tolerance improvers containing only trehalose, Met, GSSG, GABA, citric acid, VitC, or sorbic acid (Comparative Examples 24, 25, 26, 27, 28, 29, 30, and 31) and the abiotic stress tolerance improver containing only EGT (Comparative Example 23), which indicates that the abiotic stress tolerance improvers of Examples 8, 9, 10, 11, 12, 13, 14, and 15 were excellent in abiotic stress suppression ratio. In addition, the abiotic stress tolerance improvers of Examples 8, 9, 10, 11, 12, 13, 14, and 15 had larger abiotic stress suppression ratios than the theoretical value when mixed, and a synergistic effect was thus confirmed.

### Evaluation Example 5: Comparison of effects on tolerance to low-temperature stress

Abiotic stress tolerance improvers of Examples 16 and 17 and Comparative Examples 34 to 36 were prepared to have the concentrations shown in Table 5 below. Commercially available products of ergothioneine (EGT), histidine (His), and uracil were used, and pure water was used as a solvent.

To a 9-cm petri dish on which filter paper was placed, 5 mL of pure water was added, and 20 arugula seeds were sown per one petri dish. They were managed in an artificial climate chamber set at a room temperature of 22°C, and the light period and the dark period were set to 16 hours and 8 hours, respectively. As a light condition, the light intensity was set to 5000 lx at a central portion under fluorescent light irradiation.

On Day 6 after sowing, pure water in the petri dish was removed, and 5 mL of the abiotic stress tolerance improver was then added to the petri dish. 24 hours after the addition, the petri dish was exposed to an environment of 4°C for 48 hours to apply low-temperature stress.

The number of wilted leaves was counted 2 days after the low-temperature stress was applied, and a leaf wilting rate was evaluated as an index of physiological disorder. The evaluation results are indicated in Table 5. The leaf wilting rate and an abiotic stress suppression ratio (evaluation value) were calculated according to the following equations. 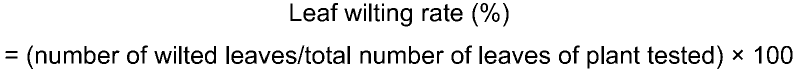 Leaf wilting rate (%) = (number of wilted leaves/total number of leaves of plant tested) × 100 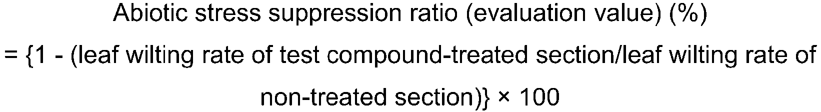 Abiotic stress suppression ratio (evaluation value) (%) = {1 - (leaf wilting rate of test compound-treated section/leaf wilting rate of non-treated section)} × 100

Then, by a method using Colby's equation (the following equation): 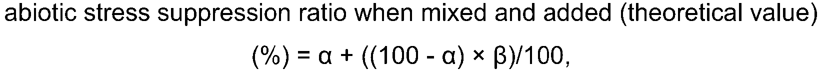 abiotic stress suppression ratio when mixed and added (theoretical value) (%) = α + ((100 - α) × β)/100, a synergistic effect of the two compounds was determined.
Note that in the above equation, α and β each represent the abiotic stress suppression ratio when each compound is added alone.

**[Table 5]**

| | EGT | Second component | | Low-temperature stress | Leaf wilting rate | Abiotic stress suppression ratio | |
|---|---|---|---|---|---|---|---|
| | mM | Component name | mM | | | Evaluation value | Theoretical value when mixed |
| Example 16 | 0.1 | His | 0.1 | Presence | 0% | 100% | 93% |
| Example 17 | 0.1 | Uracil | 0.1 | Presence | 0% | 100% | 91% |
| Comparative Example 34 | 0.1 | - | - | Presence | 21% | 78% | - |
| Comparative Example 35 | - | His | 0.1 | Presence | 32% | 66% | - |
| Comparative Example 36 | - | Uracil | 0.1 | Presence | 21% | 61% | - |
| Comparative Example 37 | - | - | - | Presence | 94% | - | - |
| Comparative Example 38 | - | - | - | Absence | 0% | - | - |

As shown in Table 5, the physiological disorder of wilting was observed in 94% of leaves of the arugula subjected to the low-temperature stress (Comparative Example 37). The abiotic stress tolerance improvers of Examples 16 and 17 exhibited low leaf wilting rates as compared with the abiotic stress tolerance improvers containing only His or uracil (Comparative Examples 35 and 36) and the abiotic stress tolerance improver containing only EGT (Comparative Example 34), which indicates that the abiotic stress tolerance improvers of Examples 16 and 17 were excellent in abiotic stress suppression ratio. In addition, the abiotic stress tolerance improvers of Examples 16 and 17 had larger abiotic stress suppression ratios than the theoretical value when mixed, and a synergistic effect was thus confirmed.

### Evaluation Example 6: Comparison of effects on tolerance to freezing stress

Abiotic stress tolerance improvers of Example 18 and Comparative Examples 39 and 40 were prepared to have the concentrations shown in Table 6 below. Commercially available products of ergothioneine (EGT) and malic acid were used, and pure water was used as a solvent.

To a 9-cm petri dish on which filter paper was placed, 5 mL of pure water was added, and 20 broccoli (Ryokuseki) seeds were sown per one petri dish. They were managed in an artificial climate chamber set at a room temperature of 22°C, and the light period and the dark period were set to 16 hours and 8 hours, respectively. As a light condition, the light intensity was set to 5000 lx at a central portion under fluorescent light irradiation.

On Day 6 after sowing, pure water in the petri dish was removed, and 5 mL of the abiotic stress tolerance improver was then added to the petri dish. 24 hours after the addition, the petri dish was exposed to an environment of - 20°C for 30 minutes, and 48 hours after that, the petri dish was further exposed to an environment of -20°C for 30 minutes to apply freezing stress.

The number of surviving plants was counted one day after the freezing stress was applied, and the mortality rate of the plants was evaluated as an index of physiological disorder. The evaluation results are indicated in Table 6. The mortality rate and the abiotic stress suppression ratio (evaluation value) were calculated according to the following equations. 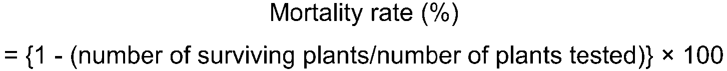 Mortality rate (%) = {1 - (number of surviving plants/number of plants tested)} × 100 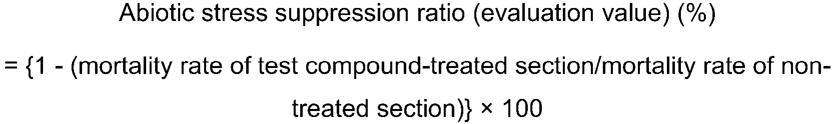 Abiotic stress suppression ratio (evaluation value) (%) = {1 - (mortality rate of test compound-treated section/mortality rate of non-treated section)} × 100

Then, by a method using Colby's equation (the following equation): 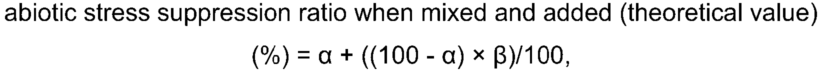 abiotic stress suppression ratio when mixed and added (theoretical value) (%) = α + ((100 - α) × β)/100, a synergistic effect of the two compounds was determined.
Note that in the above equation, α and β each represent the abiotic stress suppression ratio when each compound is added alone.

**[Table 6]**

| | EGT | Second component | | Freezing stress | Mortality rate | Abiotic stress suppression ratio | |
|---|---|---|---|---|---|---|---|
| | mM | Component name | mM | | | Evaluation value | Theoretical value when mixed |
| Example 18 | 0.1 | Malic acid | 0.1 | Presence | 0% | 100% | 61% |
| Comparative Example 39 | 0.1 | - | - | Presence | 16% | 64% | - |
| Comparative Example 40 | - | Malic acid | 0.1 | Presence | 47% | -7% | - |
| Comparative Example 41 | - | - | - | Presence | 44% | - | - |
| Comparative Example 42 | - | - | - | Absence | 0% | - | - |

As shown in Table 6, physiological disorders such as stem breakage or necrosis were observed in the broccoli due to freezing stress, and 44% of the tested broccoli plants died (Comparative Example 41). The abiotic stress tolerance improver of Example 18 exhibited a low mortality rate as compared with the abiotic stress tolerance improver containing only malic acid (Comparative Example 40) and the abiotic stress tolerance improver containing only EGT (Comparative Example 39), which indicates that the abiotic stress tolerance improver of Example 18 was excellent in abiotic stress suppression ratio. In addition, the abiotic stress tolerance improver of Example 18 had a larger abiotic stress suppression ratio than the theoretical value when mixed, and a synergistic effect was thus confirmed.

### Evaluation Example 7: Comparison of effects on tolerance to excessive nutrient stress

Abiotic stress tolerance improvers of Examples 19 to 23 and Comparative Examples 43 to 48 were prepared to have the concentrations shown in Table 7 below. Commercially available products of ergothioneine (EGT), proline (Pro), 5-aminolevulinic acid (5-ALA), glycine betaine (GB), and acetic acid were used, and pure water was used as a solvent.

In a plastic pot having a square of 60 mm and a height of 66 mm, 150 mL of granular soil (Kumiai horticultural soil) was placed, and one individual soybean was sown per one pot. A plastic deep dish having a diameter of 160 mm and a height of 28 mm was prepared, and two pots were installed therein.

The pots were managed in a greenhouse set at a room temperature of 25°C. On Day 31 after sowing, 50 mL of the plant abiotic stress tolerance improver was added to the deep dish instead of water supply, and one day after the addition, a liquid fertilizer (HYPONeX, available from HYPONeX JAPAN, Ltd.) was applied at a 5-fold dilution to apply excessive nutrient stress.

One day after the excessive nutrient stress was applied, the number of died leaves of the soybean was counted, and the leaf mortality rate was evaluated as an index of physiological disorder. The evaluation results are indicated in Table 7. The leaf mortality rate and the abiotic stress suppression ratio (evaluation value) were calculated according to the following equations. 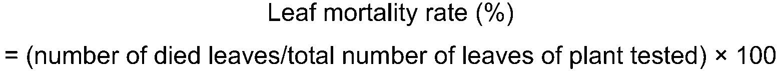 Leaf mortality rate (%) = (number of died leaves/total number of leaves of plant tested) × 100 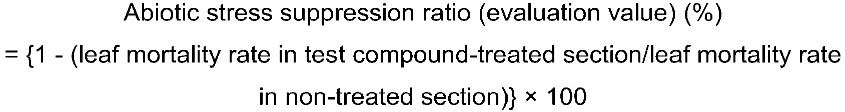 Abiotic stress suppression ratio (evaluation value) (%) = {1 - (leaf mortality rate in test compound-treated section/leaf mortality rate in non-treated section)} × 100

Then, by a method using Colby's equation (the following equation): 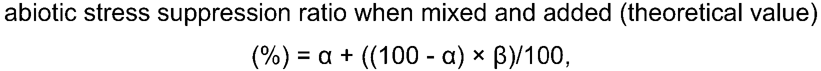 abiotic stress suppression ratio when mixed and added (theoretical value) (%) = α + ((100 - α) × β)/100, a synergistic effect of the two compounds was determined.
Note that in the above equation, α and β each represent the abiotic stress suppression ratio when each compound is added alone.

**[Table 7]**

| | EGT | Second component | | Excessive nutrient stress | Leaf mortality rate | Abiotic stress suppression ratio | |
|---|---|---|---|---|---|---|---|
| | mM | Component name | mM | | | Evaluation value | Theoretical value when mixed |
| Example 19 | 0.1 | Pro | 0.1 | Presence | 64% | 16% | 0% |
| Example 20 | 0.1 | 5-ALA | 0.1 | Presence | 55% | 28% | 4% |
| Example 21 | 0.1 | GB | 0.1 | Presence | 52% | 32% | 7% |
| Example 22 | 0.1 | Acetic acid | 0.01 | Presence | 40% | 47% | 5% |
| Example 23 | 1 | Acetic acid | 0.01 | Presence | 44% | 42% | 8% |
| Comparative Example 43 | 0.1 | - | - | Presence | 73% | 4% | - |
| Comparative Example 44 | 1 | - | - | Presence | 71% | 7% | - |
| Comparative Example 45 | - | Pro | 0.1 | Presence | 79% | -4% | - |
| Comparative Example 46 | - | 5-ALA | 0.1 | Presence | 76% | 0% | - |
| Comparative Example 47 | - | GB | 0.1 | Presence | 74% | 3% | - |
| Comparative Example 48 | - | Acetic acid | 0.01 | Presence | 75% | 1% | - |
| Comparative Example 49 | - | - | - | Presence | 76% | - | - |
| Comparative Example 50 | - | - | - | Absence | 0% | - | - |

As shown in Table 7, physiological disorders such as chlorosis were observed in soybean due to excessive nutrient stress, and 76% of leaves of the tested soybean plants died(Comparative Example 49). The abiotic stress tolerance improvers of Examples 19, 20, 21, 22, and 23 exhibited low leaf mortality rates as compared with the abiotic stress tolerance improvers containing only Pro, 5-ALA, GB, or acetic acid (Comparative Examples 45, 46, 47, and 48) and the abiotic stress tolerance improvers containing only EGT (Comparative Examples 43 and 44), which indicates that the abiotic stress tolerance improvers of Examples 19, 20, 21, 22, and 23 were excellent in abiotic stress suppression ratio. In addition, the abiotic stress tolerance improvers of Examples 19, 20, 21, 22, and 23 had larger abiotic stress suppression ratios than the theoretical value when mixed, and a synergistic effect was thus confirmed.

### Evaluation Example 8: Comparison of effects on tolerance to high-temperature stress

Abiotic stress tolerance improvers of Examples 24 and 25 and Comparative Examples 51 to 54 were prepared to have the concentrations shown in Table 8 below. Commercially available products of ergothioneine (EGT), acetic acid, and proline (Pro) were used, and pure water was used as a solvent.

In a plastic pot having a diameter of 60 mm and a height of 55 mm, 90 mL of seedling raising soil (available from TAKII & CO., LTD.) was placed, and one individual tomato (Regina) was sown per one pot. A plastic deep dish having a diameter of 160 mm and a height of 28 mm was prepared, and four pots were installed therein.

The light period was set to 16 hours and the dark period was set to 8 hours at an internal temperature of an artificial climate chamber set at a room temperature of 22°C. As a light condition, the light intensity was set to 5000 lx at a central portion under fluorescent light irradiation. The water supply was bottom watering and the water level was set to about 5 mm. On Day 30 after sowing, 50 mL of the abiotic stress tolerance improver was added instead of water supply, and 2 days after the addition, the plants were exposed to an environment of 45°C for 1 hour and then exposed to an environment of 55°C for 30 minutes to apply high-temperature stress.

The number of wilted leaves of the tomatoes subjected to high-temperature stress was counted, and a leaf wilting rate was evaluated as an index of physiological disorder. The evaluation results are indicated in Table 8. The leaf wilting rate and an abiotic stress suppression ratio (evaluation value) were calculated according to the following equations. 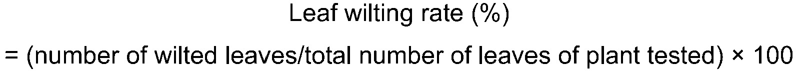 Leaf wilting rate (%) = (number of wilted leaves/total number of leaves of plant tested) × 100 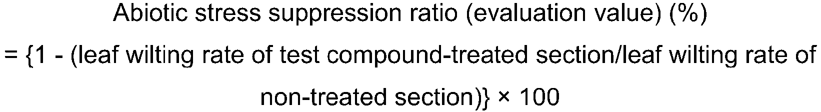 Abiotic stress suppression ratio (evaluation value) (%) = {1 - (leaf wilting rate of test compound-treated section/leaf wilting rate of non-treated section)} × 100

Then, by a method using Colby's equation (the following equation): 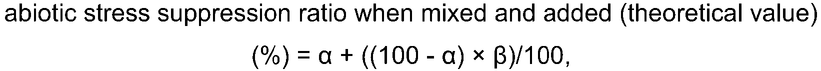 abiotic stress suppression ratio when mixed and added (theoretical value) (%) = α + ((100 - α) × β)/100, a synergistic effect of the two compounds was determined.
Note that in the above equation, α and β each represent the abiotic stress suppression ratio when each compound is added alone.

**[Table 8]**

| | EGT | Second component | | High-temperature stress | Leaf wilting rate | Abiotic stress suppression ratio | |
|---|---|---|---|---|---|---|---|
| | mM | Component name | mM | | | Evaluation value | Theoretical value when mixed |
| Example 24 | 1 | Acetic acid | 0.01 | Presence | 6% | 90% | 53% |
| Example 25 | 0.1 | Pro | 0.1 | Presence | 16% | 74% | 63% |
| Comparative Example 51 | 1 | - | - | Presence | 30% | 52% | - |
| Comparative Example 52 | 0.1 | - | - | Presence | 28% | 55% | - |
| Comparative Example 53 | | Acetic acid | 0.01 | Presence | 60% | 3% | - |
| Comparative Example 54 | | Pro | 0.1 | Presence | 51% | 18% | - |
| Comparative Example 55 | | - | - | Presence | 62% | - | - |
| Comparative Example 56 | | - | - | Absence | 0% | - | - |

As shown in Table 8, physiological disorder of wilting was observed in 62% of leaves of the tomatoes subjected to high-temperature stress (Comparative Example 55). The abiotic stress tolerance improvers of Examples 24 and 25 exhibited low leaf wilting rates as compared with the abiotic stress tolerance improvers containing only acetic acid or Pro (Comparative Examples 53 and 54) and the abiotic stress tolerance improvers containing only EGT (Comparative Examples 51 and 52), which indicates that the abiotic stress tolerance improvers of Examples 24 and 25 were excellent in abiotic stress suppression ratio. In addition, the abiotic stress tolerance improvers of Examples 24 and 25 had larger abiotic stress suppression ratios than the theoretical value when mixed, and a synergistic effect was thus confirmed.

This application claims the priority to Japanese Patent Application No. 2023-197530 filed on November 21, 2023. The original specification of such application, and the matters described in the claims are hereby incorporated by reference into the present application.

### [INDUSTRIAL APPLICABILITY]

According to the present invention, it is possible to enhance abiotic stress tolerance of a plant to increase a production amount of the plant easily.

## Claims

1. A plant abiotic stress tolerance improver, comprising:
a first component which is a compound represented by Formula (I) below or a tautomer thereof, or an agronomically acceptable salt thereof; and
a second component which is at least one selected from the group consisting of an amino acid, a peptide having a length of from 2 to 10 amino acids, a betaine, an organic acid or a salt thereof, a nucleobase, a vitamin, and a sugar or a sugar alcohol: 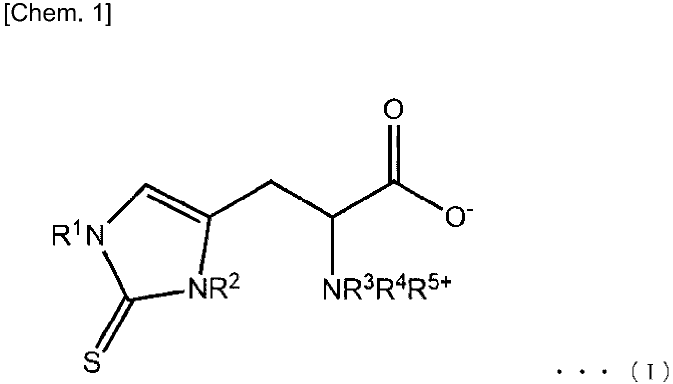
where in Formula (I), R¹ and R² each independently represent a hydrogen atom or an alkyl group having from 1 to 4 carbons, and R³, R⁴, and R⁵ each independently represent an alkyl group having from 1 to 4 carbons.

2. The abiotic stress tolerance improver according to claim 1, wherein
the compound represented by Formula (I) is ergothioneine.

3. The abiotic stress tolerance improver according to claim 1 or 2, wherein
application of the improver to a plant improves tolerance of the plant to abiotic stress which is at least one selected from the group consisting of high temperature stress, low temperature stress, freezing stress, salt stress, excessive nutrient stress, drought stress, excessive water stress, ultraviolet stress, weak light stress, intense light stress, excessive mowing stress, foot traffic stress, hail stress, and strong wind stress.

4. The abiotic stress tolerance improver according to any one of claims 1 to 3, wherein
application of the improver improves tolerance of the plant to abiotic stress which is at least one selected from the group consisting of high-temperature stress, ultraviolet stress, and excessive water stress.

5. The abiotic stress tolerance improver according to any one of claims 1 to 4, wherein
the second component includes an amino acid, and
the amino acid is glutamic acid or arginine.

6. A method for improving abiotic stress tolerance of a plant, the method comprising:
preparing a plant; and
treating the plant with the abiotic stress tolerance improver described in any one of claims 1 to 5.

7. A formulation for improving abiotic stress tolerance of a plant, the formulation comprising:
a first component which is a compound represented by Formula (I) below or a tautomer thereof, or an agronomically acceptable salt thereof;
a second component which is at least one selected from the group consisting of an amino acid, a peptide having a length of from 2 to 10 amino acids, a betaine, an organic acid or a salt thereof, a nucleobase, a vitamin, and a sugar or a sugar alcohol; and
a liquid carrier or a solid carrier: 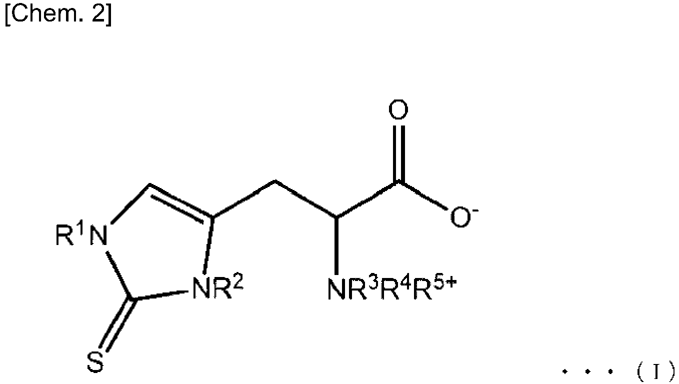
where in Formula (I), R¹ and R² each independently represent a hydrogen atom or an alkyl group having from 1 to 4 carbons, and R³, R⁴, and R⁵ each independently represent an alkyl group having from 1 to 4 carbons.

8. A product for improving abiotic stress tolerance of a plant, the product comprising:
a first container containing a first component which is a compound represented by Formula (I) below or a tautomer thereof, or an agronomically acceptable salt thereof; and
a second container containing a second component which is at least one selected from the group consisting of an amino acid, a peptide having a length of from 2 to 10 amino acids, a betaine, an organic acid or a salt thereof, a nucleobase, a vitamin, and a sugar or a sugar alcohol: 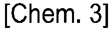 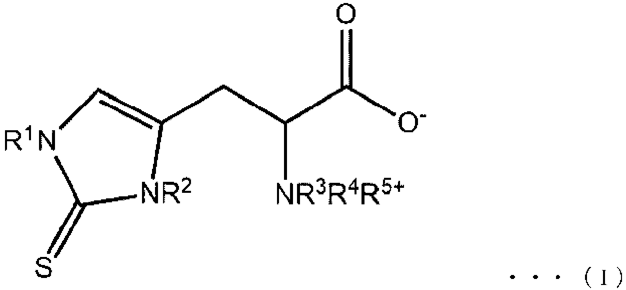
where in Formula (I), R¹ and R² each independently represent a hydrogen atom or an alkyl group having from 1 to 4 carbons, and R³, R⁴, and R⁵ each independently represent an alkyl group having from 1 to 4 carbons.

9. A plant grown by application of the abiotic stress tolerance improver described in any one of claims 1 to 5.
